# FASCICULE DE BREVET EUROPEEN

(11) **EP 3 151 623 B1**
(45) Date de publication et mention de la délivrance du brevet: **16.05.2018**
(21) Numéro de dépôt: 16189786.3
(22) Date de dépôt: 20.09.2016
(51) Int. Cl.: H04W 72/04, H04B 7/185, H04B 7/155

(54) **PROCédé DE TRANSMISSION DE PAQUETS DE DONNéES COMMUTES ENTRE UN CANAL A CONTENTION (RACH) ET UN CANAL RESERVE SUR DEMANDE (DAMA)**
VERFAHREN ZUR ÜBERTRAGUNG VON DATENPAKETEN ÜBER EINEN GEMEINSAMEN DIREKTZUGRIFFSKANAL (RACH) UND EINEN BEDARFSGESTEUERTEN MEHRFACHZUGRIFFSKANAL (DAMA)
METHOD FOR TRANSMITTING SWITCHED DATA PACKETS BETWEEN A CONTENTION-BASED CHANNEL (RACH) AND A DEMAND ASSIGNED CHANNEL (DAMA)

(30) Priorité: 02.10.2015 FR 1502051
(43) Date de publication de la demande: 05.04.2017
(73) Titulaire: Thales, 92400 Courbevoie (FR)
(72) Inventeur: GINESTE, Mathieu, 31100 Toulouse (FR); NIDDAM, David, 31100 Toulouse (FR); FAURE, Cécile, 31100 Toulouse (FR); ULPAT, Isabelle, 31100 Toulouse (FR)
(74) Mandataire: Tanguy, Yannick

(56) Documents cités:
- EP-A1- 1 686 746
- Dennis Connors ET AL: "A Quality of Service based Medium Access Control Protocol for Real-Time Sources", , 1 janvier 1999 (1999-01-01), pages 1-14, XP055273242, Extrait de l'Internet: URL:http://www.ee.ucla.edu/~pottie/papers/ dennismonet1.pdf [extrait le 2016-05-18]
- HYONG LEE ET AL: "Combined Random/Reservation Access for Packet-Switched Transmission Over a Satellite with On-Board Processing--Part II: Multibeam Satellite", IEEE TRANSACTIONS ON COMMUNICATIONS., vol. 32, no. 10, 1 octobre 1984 (1984-10-01), pages 1093-1104, XP055274251, PISCATAWAY, NJ. USA. ISSN: 0090-6778, DOI: 10.1109/TCOM.1984.1095971

## Description

La présente invention concerne un procédé optimisé de transmission de paquets de données ou fragments de paquets commutés entre un canal à contention tram RACH (en anglais « Random Access CHannel ») et un canal à ressource réservée sur demande DAMA (en anglais « Demand Assigned Multiple Access).

La présente invention concerne également un système de transmissions, configuré pour mettre en oeuvre un procédé optimisé de transmission de paquets de données ou fragments de paquets, commutés entre un canal à contention RACH et un canal à ressource réservée sur demande DAMA.

La présente invention concerne également un terminal utilisateur, intégré dans ledit système de transmission, et configuré pour transmettre des paquets de données ou des fragments de paquets commutés selon ledit procédé de transmission.

L'invention concerne encore un programme d'ordinateur comportant des instructions qui lorsqu'elles sont chargées sur des calculateurs du système de transmission exécutent le procédé optimisé de transmission.

De manière générale, l'invention est applicable à tout système de communications nécessitant un canal de transmission à contention sur un lien montant dont le trafic est sporadique, dense et non prédictible, et pouvant utiliser par exemple des satellites transparents ou régénérateurs et/ou des connections sans fil terrestres, voir même des connexions par câble.

Diverses méthodes d'accès à contention sont connues parmi lesquelles le protocole classique ALOHA asynchrone, le protocole dérivé ALOHA à segmentation temporelle ou tramée (en anglais Slotted ALOHA) et ses dérivés combinant l'effet de capture CE (en anglais Capture Effect) e/ou l'effet d'utilisation d'une diversité (temporelle ou fréquentielle) et d'une résolution des conflits d'accès CRD (en anglais Contention Resolution Diversity).

Ces protocoles sont tous des protocoles aléatoires dans lesquels chaque terminal utilisateur accède aux ressources de transmission de manière indépendante vis-à-vis des autres utilisateurs. Pour chaque paquet transmis, l'utilisateur attend un accusé de réception du destinataire. S'il ne le reçoit pas, il retransmet les mêmes données avec un retard aléatoire et ce mécanisme est itéré jusqu'à réception d'un accusé de réception ou jusqu'à ce qu'un nombre maximum de tentatives aient été réalisées.

Il est connu de coupler l'utilisation d'un accès à contention via un canal à contention RACH et l'utilisation d'un accès à la demande en mode DAMA via un canal à ressource réservé selon ce mode pour envoyer par exemple depuis un terminal utilisateur un surplus de trafic si la capacité de l'accès à la demande en mode DAMA n'est pas suffisante.

Un premier document, un article de Dennis Connors et al., intitulé « A Quality of Service based Médium Access Control Protocol for Real-Time Sources », Mobile Networks and Applications 1999, décrit un tel couplage d'utilisation d'un accès à contention RA et d'un accès à la demande DAMA. La commutation entre l'utilisation du mode RA et l'utilisation du mode DAMA est fondée sur le niveau de remplissage des files d'attentes RA et DAMA du terminal utilisateur pour sélectionner le canal à utiliser a parmi le canal RA et le canal allouée en mode DAMA.

Un deuxième document, la demande de brevet EP 1 686 746 A1, décrit également un couplage d'utilisation d'un accès à contention RA et d'un accès à la demande DAMA. Ce deuxième document décrit qu'à un instant donné la file d'attente d'un terminal contient Q paquets et une réservation de capacité pour K paquets a été faite. Les K premiers paquets de la file seront transmis par un procédé DA, en utilisant la capacité qui a déjà été réservée ; le terminal doit choisir entre deux possibilités : soit transmettre lm les Q-K paquets restants par un procédé CRDSA, soit effectuer une autre demande de réservation de capacité pour les transmettre par un procédé DA. Suivant un mode de réalisation préféré du deuxième document, à tout instant le terminal se trouve soit en mode RA, auquel cas il effectue des requêtes de capacité pour transmettre selon un procédé d'assignation en fonction de la demande. Le contenu en bits de la file d'attente à l'exécution des paquets pour lesquels une réservation de capacité a déjà été faite, indiqué (Q-K)bits, est comparé à deux valeurs de seuil, une première valeur de seuil et une deuxième valeur de seuil strictement inférieure à la première valeur. Si le terminal se trouve en modalité RA et (Q-K)bits passe au-dessus du premier seuil, il bascule vers la modalité DA. Inversement, si lm (Q-K)bits descend au-dessous du deuxième seuil lorsque le terminal se trouve en mode DA, ce dernier passe en modalité RA (mais les K paquets pour lesquels une réservation de capacité a été faite seront néanmoins transmis par le procédé DA). Ainsi dans ce deuxième document, la commutation entre l'utilisation du mode RA et l'utilisation du mode DAMA est fondée également sur le niveau de remplissage des files d'attentes RA et DAMA du terminal utilisateur pour sélectionner le canal à utiliser a parmi le canal RA et le canal allouée en mode DAMA.

En dépit des solutions proposées dans les deux documents et décrites ci-dessus, le canal à contention RACH est peu utilisé pour transférer des données utiles et reste principalement utilisée pour des phases d'accès standards et de signalisation (en anglais dénommées access-request , logon par exemple), d'une part à cause de la faible efficacité inhérente à ce type de canal (typiquement d'environ 25% pour un accès stable sur un canal RACH de type Aloha tramé ou SA), et d'autre part à cause des risques de retards d'entrée de terminaux dans système.

En outre, aucune des solutions actuelles, notamment celles décrites dans les premier et deuxième documents ne permet de transférer efficacement de petits volumes de données sporadiques et non prédictibles.

Le problème technique est d'améliorer la capacité et l'efficacité de transfert d'un procédé de transmission de paquets de données ou fragments de paquets, commutés entre un canal à contention RACH et un canal à ressource réservée sur demande DAMA, lorsque le trafic d'entrée est un trafic de petits volumes de données sporadiques et non prédictibles.

A cet effet, l'invention a pour objet un procédé de transmission sur voie montante de paquets de données et de fragments de paquets depuis un terminal TE parmi une pluralité de terminaux vers une passerelle GW, les paquets de données ou fragments de paquets étant commutés entre un premier mode d'accès à contention utilisant un canal à contention RACH et un deuxième mode d'accès à réservation sur demande DAMA utilisant un canal réservé sur demande DAMA, et le canal à contention RACH étant partagé par la pluralité de terminaux; le procédé de transmission étant caractérisé en ce qu'il comprend les étapes suivantes consistant en ce que :
.- dans une première étape, le terminal considéré TE reçoit quasiment en temps réel de la passerelle via une voie descendante une ou des informations représentatives des ressources de transmission actuelles allouées au canal à contention RACH et au mode d'accès à réservation sur demande DAMA ;
.- dans une deuxième étape, le terminal TE aiguille les paquets de données ou les fragments de paquets sur le canal à contention RACH via un accès à contention ou un canal réservé sur demande via un accès à la demande DAMA en fonction de la taille des paquets et de leur classe de service, et des informations représentatives des ressources de transmission actuelles allouées au canal à contention RACH et au mode d'accès à réservation sur demande DAMA, les informations représentatives des ressources de transmission actuelles allouées étant fournies et transmises aux terminaux de la pluralité sur une voie retour.

Suivant des modes particuliers de réalisation, le procédé de transmission comprend l'une ou plusieurs des caractéristiques suivantes :
.- la deuxième étape comprend une troisième étape de mise en oeuvre d'une classification et d'un premier aiguillage des paquets au cours de laquelle le terminal classifie les paquets en fonction de leur taille et de leur classe de service en termes de qualité de service (QoS) et aiguille les paquets en fonction de cette classification soit vers un premier ensemble uniforme de files d'attentes connectées exclusivement à l'accès à la demande, soit vers un deuxième ensemble mixte de files d'attentes connectables séparément et sélectivement dans le temps à l'un des deux accès pris parmi l'accès à contention RA et l'accès à la demande DAMA ;
.- le terminal aiguille prioritairement les paquets de données courts de faible volume de données correspondant à un trafic sporadique sur le canal à contention RACH ;
.- la deuxième étape comprend une quatrième étape consécutive à la troisième étape au cours de laquelle les paquets, délivrés en sortie des files d'attente du deuxième ensemble mixte, sont fragmentés en un ou plusieurs fragments de paquets en fonction de la taille des paquets, puis les paquets ou les fragments de paquets sont ordonnancés en fonction des priorités respectives, associées aux paquets et déterminée par les classes de qualité de service desdits paquets, puis les paquets ou les fragments de paquets sont pré-affectés au travers d'une information de pré-affectation de mode d'accès, sur un mode d'accès, pris parmi le mode d'accès RA et le mode d'accès DAMA, en fonction des informations représentatives des ressources de transmission actuelles allouées et d'un type de convergence prédéterminé, pris parmi une convergence partielle et une convergence totale, puis les paquets ou les fragments de paquets sont encapsulés suivant un protocole d'encapsulation qui dépend du type de convergence, puis les paquets ou les fragments de paquets sont aiguillés sur l'un des deux accès pris parmi l'accès à contention RA et l'accès à la demande DAMA en fonction du mode d'accès pré-affecté ;

.- lorsque le type de convergence est une convergence partielle, le protocole d'encapsulation utilisé est un protocole classique qui n'identifie pas de manière non ambiguë les fragments des paquets, et qui est transparent vis à vis de la passerelle agissant en tant que récepteur, et lorsque le mode d'accès à contention RA dispose de ressources disponibles, les paquets ou les fragments de paquets issus du deuxième ensemble mixte après fragmentation utilisent prioritairement l'accès à contention RA; et lorsque le mode d'accès à contention RA ne dispose plus de ressources disponibles, les paquets ou les fragments des paquets issus du deuxième ensemble mixte après fragmentation sont redirigés vers le mode d'accès à la demande DAMA; et lorsqu'une commutation depuis le mode d'accès RA vers le mode d'accès DAMA a lieu, le paquet ou les fragments du paquet en cours d'envoi sur le mode d'accès RA avant la commutation sont intégralement retransmis sur l'accès à la demande DAMA ;
.- lorsque le type de convergence est une convergence partielle, un mécanisme de type ARQ (Automatic Repeat reQuest) est implémenté au niveau de la couche de convergence mise en oeuvre dans la quatrième étape ;
.- lorsque le type de convergence est une convergence totale, le protocole d'encapsulation utilisé est un protocole d'encapsulation configuré pour identifier de manière non ambiguë le contenu de chaque fragment d'un paquet issu du deuxième ensemble mixte au travers d'une information d'identification du contenu de chaque fragment d'un paquet ; et le mode d'accès de chaque fragment de paquet est sélectionné en fonction de la prochaine opportunité de transmission sur un des deux accès, la prochaine opportunité de transmission étant l'instant le plus proche de l'instant actuel parmi l'instant de la prochaine émission sur le canal RACH, et l'instant de mise à disposition de ressource(s) éventuellement déjà assignée(s) sur l'accès DAMA ;

.- lorsque le type de convergence est une convergence totale, le protocole d'encapsulation utilisé est : soit un protocole d'encapsulation classique modifié en termes de l'utilisation d'une réserve de bits de signalisation, existante dans un champ de la trame du protocole non utilisé classiquement, soit un protocole d'encapsulation classique augmenté dans lequel un champ de bit a été ajouté au champ de bits existants du protocole, soit un nouveau protocole ;
.- les informations représentatives des ressources de transmission actuelles allouées au canal à contention RACH sont obtenues à partir d'une première probabilité estimée de réception d'une salve attendue vide Pₑ, ou d'une paire de probabilités estimées formée par la première probabilité mesurée Pe et une deuxième probabilité de réception d'une salve vide Pₛ, ou d'une troisième probabilité estimées d'une salve ayant subi une collision P_{c}; les probabilités Pe seule, ou Pe et Ps, ou Pc seule étant estimées continu par la passerelle GW, sur une fenêtre d'observation de largeur prédéfinie et à partir de mesures en réception dans ladite fenêtre d'observation des salves attendues ; et la troisième étape faisant partie du procédé de transmission et étant exécutée avant la première étape ;
.- les informations représentatives des ressources de transmission actuelles allouées au canal à contention RACH sont comprises dans l'ensemble formé par la composition actuelle du canal à contention et/ou la liste actuelle des classes de terminaux autorisées à émettre et des classes de terminaux non autorisées à émettre ; et les probabilités estimée Pe seule, ou Pe et Ps, ou Pc seule ; et la charge externe d'entrée du canal RACH estimée à partir de la probabilité estimée Pe ;
.- le procédé de transmission comprend en outre un procédé d'adaptation dynamique de la capacité du canal à contention, le procédé d'adaptation dynamique de la capacité étant caractérisé en ce qu'il comprend les étapes suivantes :
   .* dans une première étape, fixer la valeur d'une charge externe souhaitée en tant que point de fonctionnement nominal du canal, la charge externe réelle du canal étant égale au taux actuel de nouveaux terminaux entrants émettant une salve respective de données sur le canal ;
   .* dans une deuxième étape, estimer en continu sur une fenêtre d'observation de largeur prédéfinie et à partir de mesures en réception dans ladite fenêtre d'observation des salves attendues une première probabilité mesurée de réception d'une salve attendue vide Pe, ou une paire de probabilités mesurées formée par la première probabilité mesurée Pe et une deuxième probabilité mesurée de réception réussie d'une salve Ps, ou une troisième probabilité mesurée d'une salve ayant subi une collision Pc ;
   .* dans une troisième étape, déterminer à l'aide d'un modèle mathématique ou d'une simulation, un premier seuil supérieur S_{H} et un deuxième seuil inférieur S_{L} d'une grandeur Gr sensible de manière monotone à la charge externe du canal à contention, les charges externes du canal à contention supérieure et inférieure correspondant respectivement au premier seuil supérieur ou deuxième seuil inférieur, la grandeur sensible Gr dépendant de la première probabilité Pe ou de la troisième probabilité Pc ou de la paire des probabilités (Pe, Ps) et du type et de paramètres définissant le protocole d'accès à contention;
   .* dans une quatrième étape, déterminer la grandeur sensible actuelle fonction d'une ou des deux probabilités mesurées ;
   .* dans une cinquième étape de prise de décision, lorsqu'un franchissement du premier seuil supérieur par la grandeur sensible actuelle a lieu une fois ou plusieurs fois consécutives en s'éloignant de la valeur de la grandeur correspondant à la charge externe nominale, augmenter la capacité actuelle du canal de transmission en libérant des ressources de communication supplémentaires en termes de fréquences supplémentaires et en informant par une voie retour les terminaux de la nouvelle composition du canal de transmission à capacité augmentée ; et/ou lorsqu'un franchissement du deuxième seuil inférieur a lieu par la grandeur sensible actuelle une fois ou plusieurs fois consécutives en s'éloignant de la valeur de la grandeur correspondant à la charge externe nominale, diminuer la capacité actuelle du canal de transmission en retirant des ressources de communication en termes de fréquences parmi les ressources de transmission mis actuellement à disposition et en informant par la voie retour les terminaux de la nouvelle composition du canal de transmission à capacité diminuée ;
   .- le procédé de transmission comprend en outre un procédé de contrôle de flux, couplé audit procédé d'adaptation de capacité et qui comprend les étapes suivantes consistant en ce que :
      .* la passerelle GW fournit une liste actuelle de classes de terminaux distinguant les classes des terminaux autorisés à émettre et les classes des terminaux auxquels l'émission est interdite, et
      .* lorsque le franchissement du premier seuil supérieur S_{H} induit une décision d'augmenter la capacité du canal et qu'une taille maximale prédéterminée du canal est atteinte, la passerelle déclenche une augmentation du niveau de contrôle de flux en interdisant l'émission à une classe de terminaux autorisée à émettre de la liste actuelle choisie aléatoirement dans la liste actuelle, en mettant à jour la liste des classes autorisées à émettre et en notifiant par la voie retour aux terminaux la liste mise à jour des classes autorisées à émettre ; et
      .* lorsque le franchissement du deuxième seuil inférieur S_{L} induit une décision de diminuer la capacité du canal, la passerelle déclenche une baisse du niveau de contrôle de flux en autorisant l'émission à une classe de terminaux interdite d'émettre de la liste actuelle suite, choisie aléatoirement dans la liste actuelle, en mettant à jour la liste des classes autorisées à émettre et en notifiant par la voie retour aux terminaux la liste mise à jour des classes autorisées à émettre.

L'invention a également pour objet un système de transmission de données ou de fragments de paquets, comprenant une pluralité de terminaux utilisateur et une passerelle de connexion GW à un deuxième réseau, chaque terminal étant configuré pour transmettre à la passerelle GW sur une voie montante des paquets de données ou fragments de paquets, commutés entre un premier mode d'accès à contention utilisant un canal à contention tramé RACH partagé par la pluralité de terminaux et un deuxième mode d'accès à réservation sur demande DAMA utilisant un canal réservé sur demande DAMA ; le système de transmission étant caractérisé en ce que chaque terminal est configuré pour recevoir quasiment en temps réel de la passerelle via une voie retour une ou des informations représentatives des ressources de transmission actuelles allouées au canal à contention RACH et au mode d'accès à réservation sur demande DAMA ; et chaque terminal est configuré pour aiguiller les paquets de données ou les fragments de paquets sur le canal à contention RACH via un accès à contention ou un canal réservé sur demande via un accès à la demande DAMA en fonction de la taille des paquets et de leur classe de service, et des informations représentatives des ressources de transmission actuelles allouées au canal à contention RACH et au mode d'accès à réservation sur demande DAMA, les informations représentatives des ressources de transmission actuelles allouées étant fournies et transmises aux terminaux de la pluralité sur une voie retour.

Suivant des modes particuliers de réalisation, le système de transmission comprend l'une ou plusieurs des caractéristiques suivantes :
.- la passerelle de connexion GW est configurée pour mettre en oeuvre les étapes consistant à estimer en continu sur une fenêtre d'observation de largeur prédéfinie et à partir de mesures en réception dans ladite fenêtre d'observation des salves attendues une première probabilité mesurée de réception d'une salve attendue vide Pe, ou une paire de probabilités mesurées formée par la première probabilité mesurée Pe et une deuxième probabilité mesurée de réception réussie d'une salve Ps, ou une troisième probabilité mesurée d'une salve ayant subi une collision Pc ; déterminer une grandeur actuelle Gr sensible de manière monotone à la charge externe du canal à contention RACH à partir de la première probabilité estimée Pe ou de la troisième probabilité Pc ou de la paire des probabilités (Pe, Ps) et des paramètres définissant le protocole d'accès à contention; puis lorsqu'un franchissement d'un premier seuil supérieur S_{H} par la grandeur actuelle a lieu une fois ou plusieurs fois consécutives en s'éloignant de la valeur de la grandeur correspondant à la charge externe nominale, augmenter la capacité actuelle du canal de transmission en libérant des ressources de communication supplémentaires en termes de fréquences supplémentaires et en informant par une voie retour les terminaux de la nouvelle composition du canal de transmission à capacité augmentée ; et/ou lorsqu'un franchissement du deuxième seuil inférieur S_{L} a lieu par la grandeur sensible actuelle une fois ou plusieurs fois consécutives en s'éloignant de la valeur de la grandeur correspondant à la charge externe nominale, diminuer la capacité actuelle du canal de transmission en retirant des ressources de communication en termes de fréquences parmi les ressources de transmission mis actuellement à disposition et en informant par la voie retour les terminaux de la nouvelle composition du canal de transmission à capacité diminuée ;
.- la passerelle de connexion GW et les terminaux TE sont configurés pour mettre en oeuvre un mécanisme de contrôle de flux et un mécanisme de contrôle de congestion au travers de la fourniture régulière et fréquente par la passerelle de connexion d'une liste actuelle de classes de terminaux autorisées à émettre et de classes de terminaux non autorisé à émettre.

L'invention a également pour objet un terminal de transmission sur une voie montante de paquets de données ou fragments de paquets de paquets de données ou fragments de paquets, commutés entre un premier mode d'accès à contention utilisant un canal à contention RACH et un deuxième mode d'accès à réservation sur demande DAMA utilisant un canal réservé sur demande DAMA, le terminal étant caractérisé en ce qu'il comporte :
.- un premier accès à contention RA et un deuxième accès à la demande DAMA comportant respectivement une première file d'attente RA connectée à une première borne de sortie d'accès RA et une deuxième file d'attente DAMA connectée à une deuxième borne de sortie (236) DAMA ; et
.- un premier ensemble uniforme de files d'attentes connectées exclusivement au deuxième accès à la demande; et
.- un deuxième ensemble mixte de files d'attentes connectables séparément et sélectivement dans le temps à l'un des deux accès pris parmi le premier accès à contention RA et le deuxième accès à la demande DAMA ; et
.- une unité de classification et de premier aiguillage des paquets, configurée pour classifier les paquets en fonction de leur taille et de leur classe de service en termes de qualité de service (QoS), et aiguiller les paquets en fonction de cette classification soit vers le premier ensemble uniforme de files d'attentes, soit vers le deuxième ensemble mixte de files d'attentes.

Suivant des modes particuliers de réalisation, le terminal de transmission comprend l'une ou plusieurs des caractéristiques suivantes :
le terminal comprend en outre une unité de traitement et de convergence connectée en amont vers une borne d'entrée des paquets aux premier et deuxième ensemble de files d'attente et en amont aux premier et deuxième accès, et un agent de gestion des ressources des accès RA et DAMA connectée entre un port de voie retour de réception de signaux de signalisation et l'unité de traitement et de convergence ;
l'agent de gestion de ressources des accès étant configuré pour :
   - * surveiller les informations représentatives des ressources de transmission actuelles disponibles sur le canal à contention RACH et sur le mode d'accès à la demande DAMA, et
   - * initier des requête de ressources en fonction du remplissage des files d'attente des premier et deuxième ensembles ;
le module de traitement et de convergence étant configuré pour :
   - * fragmenter les paquets, délivrés en sortie des files d'attente du deuxième ensemble mixte, en un ou plusieurs fragments de paquets en fonction de la taille des paquets, puis
   - * ordonnancer les paquets ou les fragments de paquets en fonction des priorités respectives, associées aux paquets et déterminée par les classes de qualité de service desdits paquets, puis
   - * pré-affecter les paquets ou les fragments de paquets au travers d'une information de pré-affectation de mode d'accès, sur un mode d'accès, pris parmi le premier accès RA et le deuxième accès DAMA, en fonction d'informations représentatives des ressources de transmission actuelles allouées aux accès RA et DAMA et d'un type de convergence prédéterminé, pris parmi une convergence partielle et une convergence totale, puis
   - * encapsuler les paquets ou les fragments de paquets suivant un protocole d'encapsulation qui dépend du type de convergence, puis
   - * aiguiller les paquets ou les fragments de paquets sur l'un des deux accès pris parmi l'accès à contention RA et l'accès à la demande DAMA en fonction du mode d'accès pré-affecté.

L'invention a également pour objet un programme d'ordinateur comportant des instructions pour la mise en oeuvre du procédé de transmission tel que défini ci-dessus, lorsque le programme est exécuté par un ou plusieurs processeurs d'un système de transmission tel que défini ci-dessus.

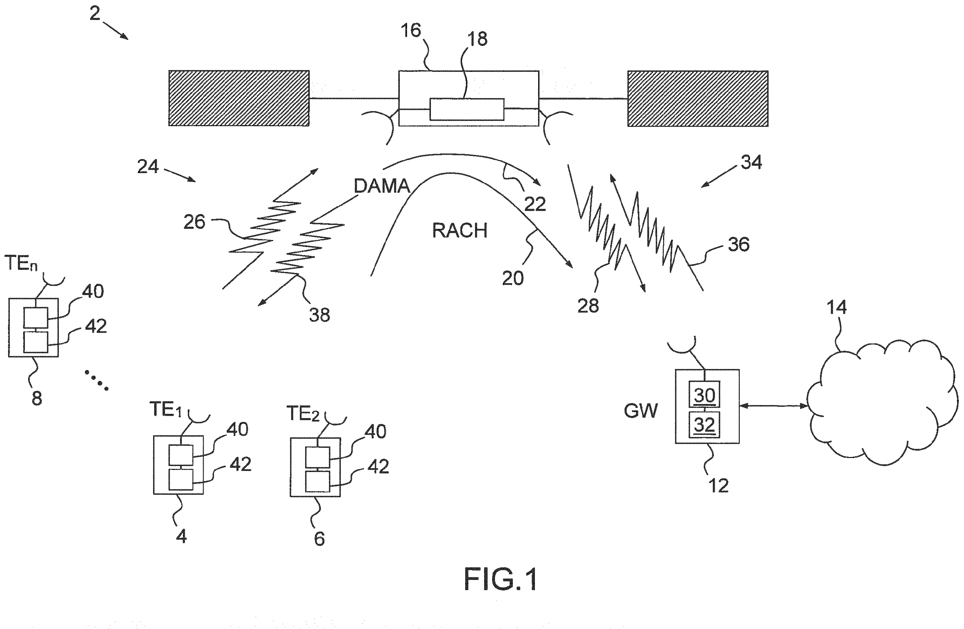

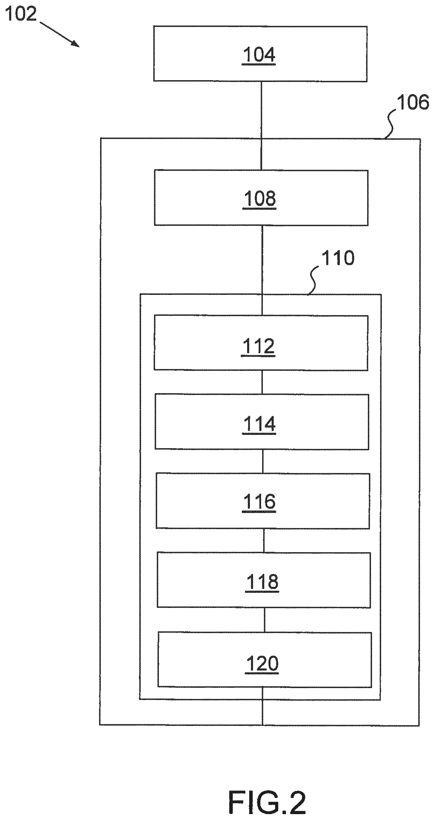

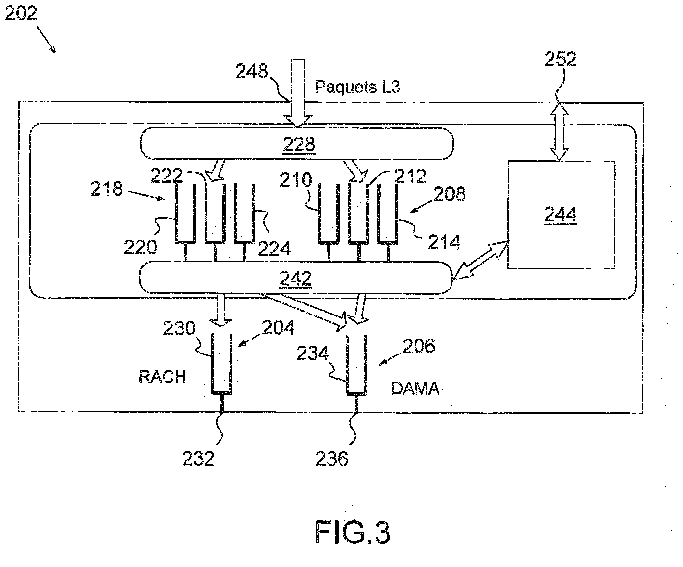

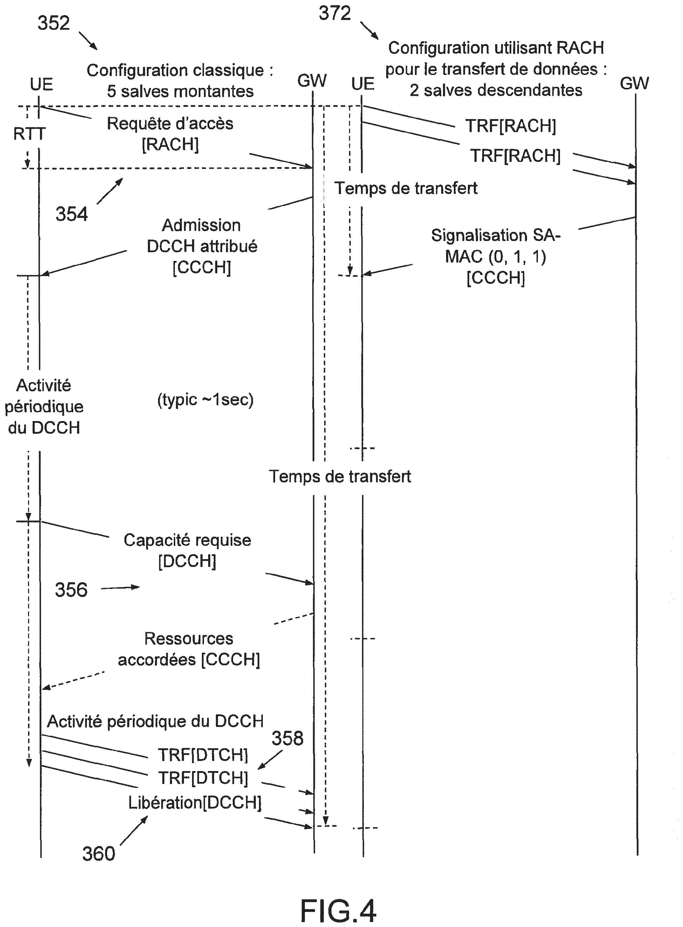

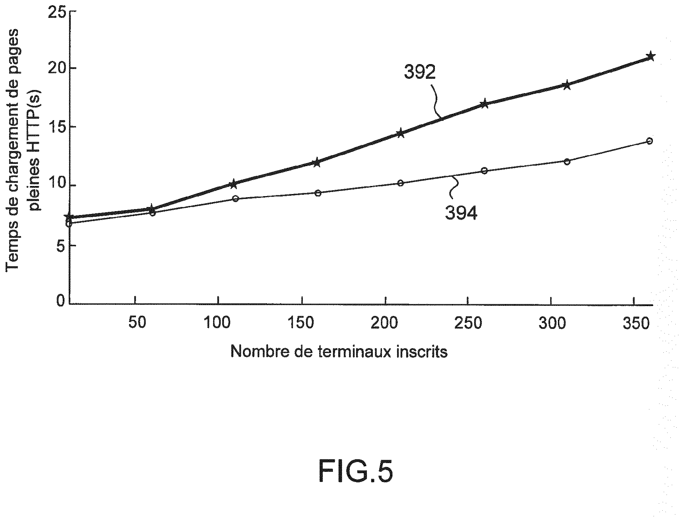

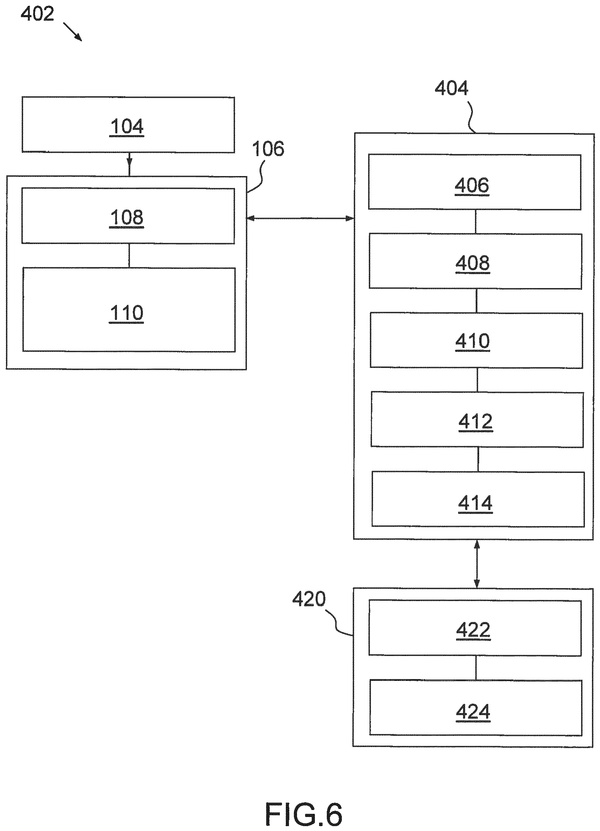

L'invention sera mieux comprise à la lecture de la description de plusieurs formes de réalisation qui va suivre, donnée uniquement à titre d'exemple et faite en se référant aux dessins sur lesquels :
.- la Figure 1 est une vue schématique d'un système de transmission selon l'invention, configuré pour mettre en oeuvre un procédé de transmission de paquets de données ou de fragments de paquets commutés entre un canal à contention RACH et un canal réservé en mode DAMA;
.- la Figure 2 est un ordinogramme d'un procédé selon l'invention de transmission de paquets de données ou de fragments de paquets commutés entre un canal à contention RACH et un canal réservé en mode DAMA mis en oeuvre par le système de transmission de la Figure 1 ;
.- la Figure 3 est une vue de l'architecture d'un terminal TE, intégré dans le système de la Figure 1 et configuré pour mettre en oeuvre le procédé de transmissions selon l'invention de la Figure 2 ;
.- la Figure 4 est une vue comparative des échanges de signalisation requis pour un transfert d'un petit volume de données utilisateur depuis un terminal vers la passerelle entre une première configuration classique de transmission dans laquelle le canal RACH à contention est utilisé seulement dans la phase d'accès au réseau et d'autres canaux d'un mode DAMA sont utilisés pour le transfert effectif des données utilisateur, et une deuxième configuration utilisant l'invention dans laquelle le canal RACH transfert effectivement les données utilisateurs ;
.- la Figure 5 est une vue comparative des performances en termes de délai entre premier système utilisant seulement un canal à contention RACH de type CRDSA pour la transmission d'un trafic sporadique non prédictible et un deuxième système DVB-RCS2 utilisant des canaux réservés en mode DA.
.- la Figure 6 est un ordinogramme d'un mode de réalisation particulier du procédé de transmission de la Figure 2 ;

L'invention est décrite ci-dessous en référence à un système de communications par satellite dans lequel une pluralité d'utilisateurs, chacun disposant d'un terminal utilisateur propre TE (en anglais « Terminal Equipment »), sont reliés par l'intermédiaire d'un satellite « transparent » (en anglais « bent pipe ») à faisceaux multiples à des passerelles G (en anglais « GateWays ») permettant l'accès à un réseau terrestre. Cela ne limite pas la portée de l'invention qui peut s'appliquer à différents systèmes de communications utilisant, par exemple, des satellites régénérateurs et/ou des connexions sans fils terrestres, voir même des connexions par câble.

Suivant la Figure 1, un système de communications par satellite 2, configuré pour mettre en oeuvre l'invention, comprend un nombre n de terminaux utilisateurs terrestres TE₁, TE₂, ....TEₙ , seuls trois terminaux 4, 6, 8 correspondant aux désignations respectives TE₁, TE₂, TEₙ étant représentés sur la Figure 1 par souci de simplicité, une passerelle de connexion 12 à un deuxième réseau 14 comme par exemple le réseau Internet, et un satellite 16 SAT.

Le satellite 16 comporte une charge utile 18 transparente ou régénérative à traitement bord qui sert de relai entre les terminaux 2, 4, 6 et la passerelle de connexion 12. Les terminaux 4, 6, 8 sont chacun configurés pour transmettre sous la forme de salves des paquets de données ou des fragments de paquets jusqu'à la passerelle de connexion 12 en commutant sélectivement les salves entre un premier mode d'accès utilisant un canal à contention 20, désigné par RACH (en anglais Random Access Channel), et un deuxième mode d'accès sur demande DAMA (en anglais Demand Assigned Mode Access) utilisant un canal réservé sur demande 22. Le canal à contention RACH 20 et les canaux réservés sur demande 22 forment une voie montante 24, décomposée en une première liaison montante 26 depuis les terminaux 4, 6, 8 jusqu'au satellite 16 et une deuxième liaison montante 28 depuis le satellite 16 jusqu'à la passerelle de connexion 12.

Une voie descendante 34 de retour de signalisation est utilisée pour envoyer depuis la station de connexion 12 jusqu'aux terminaux 4, 6, 8 une ou des informations représentatives des ressources de transmission actuelles allouées au canal à contention RACH et au mode d'accès à réservation sur demande DAMA.

La voie descendante 34 se décompose en une première liaison descendante 36 depuis la station de connexion 12 jusqu'au satellite 16 et une deuxième liaison descendante 38 depuis le satellite 16 jusqu'aux terminaux 4, 6 et 8.

De manière préférée, lorsque la stratégie de répartition du trafic vise à minimiser le nombre de ressources allouées globalement au canal à contention 20 et aux canaux réservés 22, et donc à maximiser l'utilisation du canal à contention 20 pour les paquets, le procédé tel que décrit dans la demande de brevet intitulée « Procédé d'adaptation dynamique de la capacité d'un canal de transmission à contention » et déposée conjointement à la présente demande, est utilisé.

Dans ce cas, la passerelle de connexion 12 est configurée pour recevoir et démoduler à l'aide d'un récepteur de passerelle 30 les salves des paquets de donnée ou des fragments de paquets émis par les terminaux 4, 6, 8 sur le canal RACH de transmission de voie montante à contention 20 ou sur les canaux réservés 22 en mode DAMA.

La passerelle de connexion 12 est configurée également pour adapter dynamiquement la capacité du canal à contention 20 RACH et la capacité totale des canaux réservés 22 en mode DAMA en fonction d'un trafic de terminaux entrants non prédictible et d'une stratégie de répartition du trafic entre le premier mode RA et le deuxième mode DAMA.

L'adaptation dynamique est mise en oeuvre au travers d'étapes de traitement, exécutées par une unité de traitement de passerelle 32, et d'une étape de notification régulière et continue à l'ensemble des terminaux 4, 6, 8 de la composition des ressources du premier mode RA allouées au canal à contention 20 et des ressources du deuxième mode DAMA allouées aux canaux réservés 22, la notification étant effectuée au travers d'une voie retour 34 exigeant une faible capacité. Lorsque des classes de terminaux sont définies, un mécanisme de contrôle de flux peut être mis en oeuvre par la notification régulière et continue à l'ensemble des terminaux 4, 6, 8 et en supplément d'une liste mise jour des classes de terminaux autorisés à émettre par la passerelle.

De manière générale, chaque terminal 4, 6 et 8 comprend un émetteur/récepteur 40 et une unité de traitement de terminal 42, configurés pour recevoir les informations de gestion du canal à contention 20 RACH et des canaux réservés 22 en mode DAMA, envoyées par la station de connexion 12 sur la voie descendante 34, et pour exploiter ces informations.

En variante et en supplément de l'implémentation d'un mécanisme optionnel de contrôle de flux, couplé au procédé d'adaptation dynamique de la capacité du canal de transmission 20 RACH , les terminaux 4, 6, 8 sont configurés pour mettre en oeuvre un mécanisme de contrôle de congestion du canal dans lequel l'étalement des délais de retransmission des terminaux autorisés à émettre est une fonction croissante d'un niveau de contrôle de flux représentatif du degré de congestion du canal.

Le canal à contention RACH utilise un protocole de contention tramé ou asynchrone.

Le protocole de contention tramé est compris par exemple dans l'ensemble formé par le protocole ALOHA à segmentation temporelle ou tramée (en anglais Slotted ALOHA) et ses dérivés combinant l'effet de capture CE (en anglais Capture Effect) et/ou l'effet d'utilisation d'une diversité (temporelle ou fréquentielle) et d'une résolution des conflits d'accès CRD (en anglais Contention Resolution Diversity).

Un protocole de contention asynchrone est par exemple un protocole ESSA (en anglais Enhanced Spread Spectrum ALOHA) ou un protocole SMIM (en anglais « S-band Mobile Interactive MultiMedia »).

Suivant la Figure 2 et de manière générale, un procédé de transmission 102 sur voie aller de paquets de données ou fragments de paquets depuis un terminal TE pris parmi une pluralité de terminaux vers une passerelle GW est mis en oeuvre, par exemple, par le système de transmission décrit dans la Figure 2.

Les paquets de données ou fragments de paquets sont commutés entre le premier mode d'accès à contention utilisant le canal à contention tramé 20 RACH et le deuxième mode d'accès sur demande DAMA utilisant un canal réservé sur demande 22.

Le canal à contention RACH 20 est partagé par la pluralité de terminaux 4, 6, 8.

Le procédé de transmission 102 comprend une première étape 104 suivie d'une deuxième étape 106.

Dans la première étape 104, le terminal considéré TE reçoit quasiment en temps réel de la passerelle de connexion 12 via la voie retour 34 une ou des informations représentatives des ressources de transmission actuelles allouées au canal à contention RACH et au mode d'accès à réservation sur demande DAMA.

Puis dans la deuxième étape 106, le terminal considéré TE aiguille les paquets de données ou les fragments de paquets sur le canal à contention 20 RACH via un accès à contention du terminal ou sur un canal réservé sur demande 22 via un accès à la demande DAMA du terminal en fonction de la taille des paquets et de leur classe de service, et des informations représentatives des ressources de transmission actuelles allouées au canal à contention 20 RACH et au mode d'accès à réservation sur demande DAMA. Les informations représentatives des ressources de transmission actuelles allouées sont fournies et transmises aux terminaux 4, 6, 8 de la pluralité sur la voie retour 34.

Selon l'approche de l'invention et à l'inverse de ce qui est proposé classiquement, l'état explicite ou implicite du canal d'accès à contention 20 en termes d'une grandeur représentative de la charge externe du canal 20 RACH est pris en compte pour transmettre du trafic utile (différent de la signalisation propre à la transmission) prioritairement sur ce canal 20 et de manière plus efficace en termes d'utilisation de la ressource que sur le canal 22 réservé à la demande dans le deuxième mode DAMA.

Ici et à l'inverse de ce qui est proposé classiquement, le niveau de remplissage des files d'attente du terminal n'est pas utilisé. Ici, le niveau de charge et/ou de congestion du canal à contention 20, transmis implicitement ou explicitement par la passerelle de connexion 12 et reçu par les terminaux, est utilisé prioritairement et de manière prédominante.

Cette nouvelle approche convient particulièrement à la transmission d'une partie ou de la totalité d'un trafic sporadique et non prédictible qui est généralement et classiquement envoyé en mode DAMA ou en mode « circuit ».

Cette nouvelle approche permet d'éviter en mode circuit la réservation et l'immobilisation de ressources pendant une longue période, d'éviter en mode DAMA un volume de signalisation et un délai associé important ainsi qu'une utilisation sous-optimale des ressources potentielles, tandis que l'on cherche à transmettre un ou quelques messages de données utiles, souvent un unique message.

La deuxième étape 106 comprend une troisième étape 108 suivie d'une quatrième étape 110.

La troisième étape 108 est une étape de classification et d'un premier aiguillage des paquets au cours de laquelle le terminal TE classifie les paquets en fonction de leur taille et de leur classe de service en termes de qualité de service (QoS). Le terminal TE aiguille ensuite les paquets en fonction de cette classification, soit vers un premier ensemble uniforme de files d'attentes connectées exclusivement à l'accès à la demande, soit vers un deuxième ensemble mixte de files d'attentes connectables séparément et sélectivement dans le temps à l'un des deux accès pris parmi l'accès à contention RA et l'accès à la demande DAMA.

La quatrième étape 110, consécutive à la troisième étape 108, est une étape au cours de laquelle les paquets, délivrés en sortie des files d'attente du deuxième ensemble mixte, sont fragmentés 112 en un ou plusieurs fragments de paquets en fonction de la taille des paquets. Puis, dans la même étape 110 les paquets ou les fragments de paquets sont ordonnancés 114 en fonction des priorités respectives, associées aux paquets et déterminée par les classes de qualité de service desdits paquets. Ensuite, les paquets ou les fragments de paquets sont pré-affectés 116 au travers d'une information de pré-affectation de mode d'accès, sur un mode d'accès, pris parmi le mode d'accès RA et le mode d'accès DAMA, en fonction des informations représentatives des ressources de transmission actuelles allouées et d'un type de convergence prédéterminé, pris parmi une convergence partielle et une convergence totale. Puis, les paquets ou les fragments de paquets sont encapsulés 118 suivant un protocole d'encapsulation qui dépend du type de convergence. Ensuite, les paquets ou les fragments de paquets sont aiguillés 120 sur l'un des deux accès pris parmi l'accès à contention RA et l'accès à la demande DAMA en fonction du mode d'accès pré-affecté.

Deux types de convergence, une convergence partielle et une convergence totale peuvent être mise en oeuvre. Le choix du type de convergence est fonction du système de communications considéré et de la stratégie envisagée concernant la complexité et l'efficacité d'utilisation des ressources de transmission.

Dans les deux cas, une information côté terminal représentative du niveau de charge et/ou de la congestion de l'accès à contention est utilisé de manière à ne pas congestionner le canal TACH qui reste réservé en priorité à la signalisation, généralement le « logon ».

Dans le premier cas d'une convergence partielle, une modification limitée de l'accès est nécessaire et une transparence pour les piles protocolaires est respectée. La couche de convergence partielle est définie de sorte à permettre la sélection et la transmission prioritaire sur le canal à contention RACH de messages appropriés tels que des messages d'un service sporadique, des messages courts ou des messages avec certaines exigences de trafic. Si la transmission sur le canal à contention échoue ou si le niveau de congestion du canal RACH est trop élevé, les messages sont alors transmis sur un canal réservé en mode d'accès DAMA. Cette couche de convergence partielle est positionnée en amont des deux types d'accès (RA et DAMA) et en dessous de la couche réseau, mais reste relativement transparente pour le niveau liaison de données (encapsulation, fragmentation/réassemblage).

L'efficacité de transmission conférée par ce type de convergence n'est pas maximale pour ce type de convergence. Toutefois, cette convergence partielle peut déjà améliorer significativement l'utilisation des ressources des systèmes de communications actuels et ne nécessite pas de modification des piles protocolaires existantes mais uniquement l'ajout de la couche de convergence côté terminal.

Dans le deuxième cas d'une convergence totale, une gestion commune des deux accès RA et DAMA est réalisée. Cette approche permet ainsi une grande flexibilité d'utilisation des deux accès RA et DAMA et une utilisation optimale des ressources de transmission en fonction de la disponibilité de ces dernières et des exigences de qualité de service (QoS) des communications. Pour cela, les messages préférés pour à être transmis en mode RA sont sélectionnés se basant sur les caractéristiques du trafic et ses exigences de qualité de service (QoS). Si de tels messages existent, une partie de ce trafic pourra être transmis dans le premier mode d'accès RA et une autre partie du trafic dans le deuxième mode d'accès DAMA en fonction de la disponibilité des ressources de transmission dans chaque accès et de la priorité du trafic.

Les deux types de convergence utilisent une architecture de terminal identique décrite sur la Figure 3.

Suivant cette architecture, chaque terminal TE, 4, 6, 8, ici un terminal générique 202 étant représenté, comporte un premier accès 204 à contention RA et un deuxième accès 206 à la demande DAMA, un premier ensemble 208 uniforme de files d'attentes 210, 212, 214, un deuxième ensemble mixte 218 de files d'attentes 220, 222, 224, une unité 228 de classification et de premier aiguillage des paquets.

Le premier accès 204 et le deuxième accès 206 comportent respectivement une première file d'attente RA 230, connectée à une première borne de sortie 232 d'accès RA, et une deuxième file d'attente DAMA 234, connectée à une deuxième borne de sortie 236 DAMA.

Les files d'attentes 210, 212, 214 du premier ensemble 208 uniforme sont connectées exclusivement au deuxième accès 206 à la demande.

Les files d'attentes 220, 222, 224 du deuxième ensemble mixte 218 sont connectables séparément et sélectivement dans le temps à l'un des deux accès 204, 206 pris parmi le premier accès 204 à contention RA et le deuxième accès 206 à la demande DAMA.

L'unité 228 de classification et de premier aiguillage des paquets de niveau 3 selon le modèle en couches OSI ou paquets L3, est configurée pour classifier les paquets L3 en fonction de leur taille et de leur classe de service en termes de qualité de service (QoS), et aiguiller les paquets en fonction de cette classification soit vers le premier ensemble 208 uniforme des files d'attentes 210, 212, 214, soit vers le deuxième ensemble 218 mixte des files d'attentes 220, 222, 224.

Indépendamment du type de convergence utilisé, la classification du trafic est réalisée en fonction des caractéristiques du trafic (sporadicité, tailles des paquets) et de ses exigences en termes de Qualité de Service. Ainsi, les paquets de niveau 3 sont aiguillés soit vers les files d'attentes 210, 212, 214 du premier ensemble 208 associées au canal à la demande uniquement du deuxième accès 206, soit vers les files d'attentes 220, 222, 224 du deuxième ensemble permettant d'accéder aux deux accès à la demande et à contention. A l'intérieur du deuxième ensemble 218 mixte de files, une classification des paquets L3 peut être réalisée pour rediriger ces paquets vers une file associée à une classe de service spécifique.

Une classification distincte peut être mise en oeuvre dans le cas d'une convergence partielle ou d'une convergence totale. En effet, étant donnée la plus grande flexibilité de l'accès dans le cas de la convergence totale, une plus grande partie du trafic peut être aiguillée vers la partie mixte (files accès à contention et à la demande) si cela a un sens en termes de ressources allouées au canal d'accès à contention.

Le terminal 202 comprend également une unité 242 de traitement et de convergence et un agent 244 de gestion des ressources des accès RA et DAMA.

L'unité 242 de traitement et de convergence est connectée en amont vers une borne d'entrée 248 des paquets L3 aux premier et deuxième ensembles 208, 218 de files d'attente et en aval aux premier et deuxième accès 204, 206.

L'agent 244 de gestion des ressources des accès RA et DAMA est connectée entre un port 252 de voie retour de réception de signaux de signalisation et l'unité 242 de traitement et de convergence,

L'agent 244 de gestion de ressources des accès est configuré pour :
- * surveiller les informations représentatives des ressources de transmission actuelles disponibles sur le canal à contention RACH et sur le mode d'accès à la demande DAMA, et
- * initier des requête de ressources en fonction du remplissage des files d'attente des premier et deuxième ensembles 218 et 208.

Le module de traitement et de convergence 242 est configuré pour :
- * fragmenter les paquets L3, délivrés en sortie des files d'attente du deuxième ensemble mixte, en un ou plusieurs fragments de paquets en fonction de la taille des paquets L3, puis
- * ordonnancer les paquets ou les fragments de paquets en fonction des priorités respectives, associées aux paquets et déterminée par les classes de qualité de service desdits paquets, puis
- * pré-affecter les paquets ou les fragments de paquets au travers d'une information de pré-affectation de mode d'accès, sur un mode d'accès, pris parmi le premier accès RA et le deuxième accès DAMA, en fonction d'informations représentatives des ressources de transmission actuelles allouées aux accès RA et DAMA et d'un type de convergence prédéterminé, pris parmi une convergence partielle et une convergence totale, puis
- * encapsuler les paquets ou les fragments de paquets suivant un protocole d'encapsulation qui dépend du type de convergence, puis
- * aiguiller les paquets ou les fragments de paquets sur l'un des deux accès pris parmi l'accès à contention RA et l'accès à la demande DAMA en fonction du mode d'accès pré-affecté.

L'agent 244 de gestion des ressources RA et à la demande qui permet de surveiller les ressources de transmission et initier les requêtes de ressource lorsque cela est nécessaire possède une architecture fonctionnelle et physique sensiblement identique pour les deux types de convergence. Il centralise toutes les informations liées à la disponibilité des ressources sur les deux accès 204 et 206 comme le niveau de contrôle de flux et de congestion sur le canal à contention RACH et les allocations de ressources sur le deuxième mode d'accès DAMA. Il effectue les requêtes de ressources en fonction du remplissage des files d'attente de la couche de convergence et d'un cycle d'allocation ou de réservation des ressources prédéterminé.

Les fonctionnements de l'unité 242 de traitement et de convergence et de l'agent 244 de gestion des ressources sont différents en fonction du type de convergence utilisé.

Lorsque le type de convergence est une convergence partielle, le protocole d'encapsulation utilisé est un protocole classique qui n'identifie pas de manière non ambiguë les fragments des paquets, et qui est transparent vis à vis de la passerelle agissant en tant que récepteur.

Dans ce cas, lorsque le mode d'accès à contention RA dispose de ressources disponibles, les paquets ou les fragments de paquets issus du deuxième ensemble mixte après fragmentation utilisent prioritairement l'accès à contention RA.

Lorsque le mode d'accès à contention RA ne dispose plus de ressources disponibles, les paquets ou les fragments des paquets issus du deuxième ensemble mixte après fragmentation sont redirigés vers le mode d'accès à la demande DAMA.

De plus, lorsqu'une commutation depuis le mode d'accès RA vers le mode d'accès DAMA a lieu, le paquet ou les fragments du paquet en cours d'envoi sur le mode d'accès RA avant la commutation sont intégralement retransmis sur l'accès à la demande DAMA.

Dans ce cas, la partie encapsulation est identique aux encapsulations classiques existantes dites « legacy », ce qui permet à la convergence partielle d'être totalement transparente vis à vis de la station de connexion GW, considéré comme le récepteur de la liaison aller.

La sélection de l'accès pour le trafic venant des files mixtes du deuxième ensemble mixte 218, c'est-à-dire le trafic pouvant utiliser un accès à la demande ou un accès à contention indifféremment, prend en compte la disponibilité de la ressource pour les deux accès qu'elle obtient auprès de l'agent de gestion des ressources). Ce trafic est dirigé et envoyé sur le canal à contention RACH si de la ressource de transmission est disponible sur ce canal. Si de la ressource sur le canal à contention n'est pas ou n'est plus disponible, en raison d'une notification reçue par le terminal TE que le contrôle de flux et/ou le contrôle de congestion sont activés par exemple, le trafic est redirigé vers le canal réservé selon le deuxième mode d'accès à la demande. Le paquet qui n'a pu alors être transmis en totalité sur le canal RACH, c'est-à-dire la totalité des fragments de ce paquet, doit être retransmis complètement sur le canal réservé à la demande.

Optionnellement, si un mécanisme ARQ n'est pas implémenté au niveau applicatif ou au niveau 2 et selon la qualité de transmission requise et le niveau de modification toléré dans le récepteur, un mécanisme de type ARQ (Automatic Repeat reQuest) est ajouté et implémenté au niveau de la couche de convergence mise en oeuvre dans la quatrième étape.

L'ajout d'un protocole simple de segmentation et réassemblage en mode RA permet d'assurer le transport des données d'un utilisateur en mode « non connecté » en implémentant par exemple un mécanisme du type « envoi et attente d'un acquittement » avec une fenêtre unitaire correspondant à l'émission d'un message par message, et en fournissant au minimum sur la voie montante un identifiant unique de l'émetteur, le numéro de message, les numéros des segments des données à émettre. Sur bonne réception, le récepteur, c'est-à-dire la passerelle GW, répond à l'émetteur, c'est-à-dire le terminal TE, via un canal commun de type diffusion en envoyant comme informations : l'identifiant de l'émetteur, le numéro de message et la liste des segments d'un message reçus et non reçus. Un segment peut être retransmis s'il n'a pas été correctement reçu par le récepteur GW.

Le protocole décrit ci-dessus permet également le transport de messages de contrôle d'accès, par exemple de messages de demande de ressources, de maintenance du canal RACH.

Lorsque le type de convergence est une convergence totale, le protocole d'encapsulation utilisé est un protocole d'encapsulation configuré pour identifier de manière non ambiguë le contenu de chaque fragment d'un paquet issu du deuxième ensemble mixte 218 au travers d'une information d'identification du contenu de chaque fragment d'un paquet. Le mode d'accès de chaque fragment de paquet est sélectionné en fonction de la prochaine opportunité de transmission sur un des deux accès RA et DAMA. La prochaine opportunité d'émission est l'instant le plus proche de l'instant actuel parmi l'instant de la prochaine émission sur le canal RACH, et l'instant de mise à disposition de ressource(s) éventuellement déjà assignée(s) sur l'accès DAMA.

L'instant de la prochaine émission sur le canal RACH est défini à partir d'une ou plusieurs temporisations T1, T2, l'une d'entre elle étant tirée aléatoirement suivant une loi prédéterminée de tirage, et le paramétrage de cette loi pouvant dépendre de l'état des classes des terminaux autorisées à émettre. Une procédure de définition des instants d'émission par un terminal sur le canal RACH est décrite par exemple dans la demande de brevet EP 2787702 A1 ou dans la demande de brevet intitulée « Procédé d'adaptation dynamique de la capacité d'un canal de transmission à contention » et déposée conjointement à la présente demande.

Un complément d'encapsulation est requis pour prendre en compte la transmission concurrente sur les deux accès de premier mode RA et de deuxième mode DAMA, ce qui implique la mise en oeuvre d'une couche d'encapsulation équivalente sur le récepteur, c'est-à-dire au niveau de la passerelle GW.

La sélection de l'accès venant des files mixtes du deuxième ensemble est effectuée dans ce cas uniquement en fonction de la prochaine opportunité de transmission sur un des deux accès, pouvant être alternativement sur l'un ou l'autre des canaux aux modes d'accès différents. A la différence de la convergence partielle, un paquet peut être transmis en partie sur l'accès à contention et en partie sur l'accès à la demande. La couche de segmentation et réassemblage tient compte des deux modes d'accès différents afin d'identifier de façon non ambiguë le contenu d'un fragment de paquet à émettre par l'émetteur du terminal TE et de réassembler correctement les données par la station de connexion GW. Ainsi, un ou plusieurs fragments d'un paquet peuvent utiliser le canal RA tandis que les fragments restants du même paquet peuvent utiliser le canal DAMA avec des tailles de salves pouvant être différentes de celles du canal RACH.

Lorsque le type de convergence est une convergence totale, le protocole d'encapsulation utilisé peut être :
.- soit un protocole d'encapsulation classique modifié en termes de l'utilisation d'une réserve de bits de signalisation, existante dans un champ de la trame du protocole non utilisé classiquement,
.- soit un protocole d'encapsulation classique augmenté dans lequel un champ de bit a été ajouté au champ de bits existants du protocole,
.- soit un nouveau protocole.

Suivant la Figure 4, une première configuration classique 352 de transmission ou de transfert de données entre un terminal TE et une passerelle GW utilise un premier canal RACH à contention et un deuxième canal en mode DAMA, couplé au premier canal RACH et comprend en général quatre étapes ou phases.

Dans une première phase 354, le terminal TE accède au réseau via le canal RACH à contention, défini par une trame logique de segmentation temporelle et partagé entre utilisateurs, et attend comme réponse d'un canal de notification CCCH (en anglais Common Control Channel) au moins une allocation de ressource minimale de contrôle.

Puis, dans une deuxième phase 356, le terminal TE demande des ressources dédiées (mode DAMA) via le canal de contrôle DCCH (en anglais Dedicated Control Channel) qui lui a été alloué dans la première phase 354 pour écouler les données qui peuvent être des données utiles d'un service utilisateur mais également de signalisation et/ou de contrôle du système de transmission comme par exemple des données de synchronisation, de contrôle de puissance, etc.

Ensuite, dans une troisième phase 358, le terminal TE transfert le volume utile de données vers la passerelle GW sur les ressources allouées, en l'espèce un canal de trafic DTCH (en anglais Dedicated Traffic Channel), allouées dans la deuxième phase 356 sur le canal de notification CCCH.

Puis dans une quatrième phase 360, les ressources DCCH et DTCH allouées dans les première et deuxième phases 354, 356 sont libérées en fin de transfert.

Le canal de contrôle DCCH est généralement dédié sur un circuit multiplexé entre les terminaux TE

Les ressources allouées sont : soit en mode DAMA (majoritairement le cas), soit en mode PAMA ou « circuit » éventuellement multiplexé.

Cette première configuration de transfert de données 352 peut être utilisée et est utilisée pour transférer de faibles volume de données.

Les applications typiques qui nécessitent un faible volume de données sont par exemple du type collectes (en anglais « gathering »), télémesures / capteurs, alarmes, les équivalent SMS ». Une autre application peut être également la signalisation de couche MAC / DAMA (requête de capacité, maintenance-synchronisation, etc.).

Cette première configuration de transfert de données 352 est inefficace pour transférer de petits volumes de données sporadiques. En effet, le rapport du volume des données utiles sur le volume total des ressources allouées et le temps de transfert utile sur le temps de session totale sont faibles pour cette configuration.

Une deuxième configuration 372, décrite sur la Figure 4, est proposée pour pallier cette inefficacité. La deuxième configuration de transfert de données 372 exploite avantageusement la flexibilité de la mise à jour de la capacité du canal RACH apporté par le procédé d'adaptation de la capacité du canal RACH afin de transférer directement les données sur ce canal RACH, maximiser ainsi la capacité instantanée requise sans écroulement du canal, et minimiser les ressources utiles et les temps de session de transfert.

Les données de l'utilisateur sont alors segmentées sur quelques salves montantes par le terminal TE puis réassemblées par la passerelle GW. Un protocole léger en mode non connecté entre le terminal TE et la passerelle GW est mis en oeuvre afin de pouvoir retransmettre d'éventuels segments de données (type « liste segments reçus/non reçus » par exemple) lorsqu'une collision de salves a lieu. Le nombre de salves montantes requis dépend directement de la taille de la charge utile (en anglais « payload ») d'une selon les performances de la forme d'onde utilisée en termes par exemple de temps de garde, de modulation/codage.

En considérant par exemple deux salves montantes utiles pour écouler les données d'un utilisateur TE, les diagrammes des échanges dimensionnés pour le transfert de ces deux salves utiles permettent de déterminer un premier facteur de gain en termes de ressources utiles égale à deux environ (2,25 salves pour la deuxième configuration au lieu de 5,12 salves pour la première configuration), et un deuxième facteur de gain en termes de temps de transfert utile égale à quatre environ lorsqu'un satellite géostationnaire est utilisé.

Suivant la Figure 5, les performances en termes de délai de transfert d'une page pleine au format du protocole Internet http par rapport au nombre de terminaux inscrit dans le système sont comparées entre un premier système utilisant seulement un canal à contention RACH de type CRDSA avec un contrôle de congestion et un deuxième système DVB-RCS2 (en anglais Digital Video Broadcast - Return Channel 2^{nd} génération) utilisant des canaux réservés en mode DA lorsque le trafic d'entrée est un trafic internet sporadique non prédictible.

Une première courbe 392 représente l'évolution du délai de transfert d'une page pleine internet http en fonction du nombre de terminaux inscrits dans le cas de l'utilisation du premier système de transmission.

Une deuxième courbe 394 représente l'évolution du délai de transfert d'une page pleine internet http en fonction du nombre de terminaux inscrits dans le cas de l'utilisation du deuxième système de transmission.

La Figure 5 montre que le délai de transfert est considérablement réduit, de près de moitié, pour une charge de 350 terminaux, soit environ 40% d'utilisation du canal, lorsqu'un canal d'accès à contention de type CRDSA est utilisé au lieu d'un canal d'accès réservé en mode DAMA.

Les informations représentatives des ressources de transmission actuelles allouées au canal à contention tramé RACH peuvent être obtenues à partir d'une première probabilité estimée de réception d'une salve attendue vide Pe, ou d'une paire de probabilités estimées formée par la première probabilité mesurée Pe et une deuxième probabilité de réception réussie d'une salve Ps, ou d'une troisième probabilité estimées d'une salve ayant subi une collision Pc.

Les probabilités Pe seule, ou Pe et Ps, ou Pc seule sont estimées continu par la passerelle GW, sur une fenêtre d'observation de largeur prédéfinie et à partir de mesures en réception dans ladite fenêtre d'observation des salves attendues au cours d'une étape exécutée avant la première étape.

Les informations représentatives des ressources de transmission actuelles allouées au canal à contention RACH sont comprises dans l'ensemble formé par :
.- la composition actuelle du canal à contention et/ou la liste actuelle des classes de terminaux autorisées à émettre et des classes de terminaux non autorisées à émettre ; et les probabilités estimée Pe seule, ou Pe et Ps, ou Pc seule ; et
.- la charge externe d'entrée du canal RACH estimée à partir de la probabilité estimée Pe.

Suivant la Figure 6 et un mode de réalisation particulier 402 du procédé de transmission 102 décrit à la Figure 2, le procédé de transmission 402 sur voie aller de paquets de données ou de fragments de paquets comprend les mêmes première, deuxième, troisième, quatrième étapes 104,106, 108, 110 que celles du procédé 102 et comprend en outre, couplé à la deuxième étape 106, un procédé d'adaptation dynamique 404 de la capacité du canal à contention RACH. Le procédé d'adaptation dynamique 404 de la capacité du canal RACH est décrit avec des variantes dans la demande de brevet intitulée « Procédé d'adaptation dynamique de la capacité d'un canal de transmission à contention » et déposée conjointement à la présente demande.

Le procédé d'adaptation dynamique 404 comprend un ensemble d'étapes suivantes

Dans une cinquième étape 406, la valeur d'une charge externe souhaitée est fixée en tant que point de fonctionnement nominal du canal RACH, la charge externe réelle du canal étant égale au taux actuel de nouveaux terminaux entrants émettant une salve respective de données sur le canal.

Puis, dans une sixième étape 408, la passerelle de connexion GW estime en continu sur une fenêtre d'observation de largeur prédéfinie et à partir de mesures en réception dans ladite fenêtre d'observation des salves attendues une première probabilité mesurée de réception d'une salve attendue vide Pe, ou une paire de probabilités mesurées formée par la première probabilité mesurée Pe et une deuxième probabilité mesurée de réception réussie d'une salve Ps, ou une troisième probabilité mesurée d'une salve ayant subi une collision Pc .

Dans une septième étape 410, à l'aide d'un modèle mathématique ou d'une simulation, un premier seuil supérieur S_{H} et un deuxième seuil inférieur S_{L} d'une grandeur Gr, sensible de manière monotone à la charge externe du canal à contention RACH sont déterminés. Les charges externes du canal à contention supérieure et inférieure correspondent respectivement au premier seuil supérieur ou deuxième seuil inférieur, et la grandeur sensible Gr dépend de la première probabilité Pe ou de la troisième probabilité Pc ou de la paire des probabilités (Pe, Ps) et de paramètres définissant le protocole d'accès à contention.

Puis dans une huitième étape 412, la grandeur sensible actuelle est déterminée en fonction d'une ou des deux probabilités mesurées.

Ensuite, une neuvième étape 414 de prise de décision est exécutée par la station de connexion.

Lorsqu'un franchissement du premier seuil supérieur S_{H} par la grandeur sensible actuelle a lieu une fois ou plusieurs fois consécutives en s'éloignant de la valeur de la grandeur correspondant à la charge externe nominale, la passerelle de connexion GW augmente la capacité actuelle du canal de transmission RACH en libérant des ressources de communication supplémentaires en termes de fréquences supplémentaires et en informant par une voie retour les terminaux de la nouvelle composition du canal de transmission à capacité augmentée.

Lorsqu'un franchissement du deuxième seuil inférieur S_{L} a lieu par la grandeur sensible actuelle une fois ou plusieurs fois consécutives en s'éloignant de la valeur de la grandeur correspondant à la charge externe nominale, la passerelle de connexion GW diminue la capacité actuelle du canal de transmission RACH en retirant des ressources de communication en termes de fréquences parmi les ressources de transmission mis actuellement à disposition et en informant par la voie retour les terminaux de la nouvelle composition du canal de transmission à capacité diminuée.

Le procédé de transmission 402 comprend sur voie aller de paquets de données ou de fragments de paquets comprend en outre un procédé de contrôle de flux 420, couplé audit procédé d'adaptation dynamique 404 de capacité.

Le procédé de contrôle de flux 420 comprend un ensemble d'étapes suivantes.

Dans une dixième étape 422, la passerelle GW fournit une liste actuelle de classes de terminaux distinguant les classes des terminaux autorisés à émettre et les classes des terminaux auxquels l'émission est interdite.

Puis dans une onzième étape 424, lorsque le franchissement du premier seuil supérieur S_{H} induit une décision d'augmenter la capacité du canal et qu'une taille maximale prédéterminée du canal est atteinte, la passerelle déclenche une augmentation du niveau de contrôle de flux en interdisant l'émission à une classe de terminaux autorisée à émettre de la liste actuelle choisie aléatoirement dans la liste actuelle, en mettant à jour la liste des classes autorisées à émettre et en notifiant par la voie retour aux terminaux la liste mise à jour des classes autorisées à émettre.

Lorsque le franchissement du deuxième seuil inférieur S_{L} induit une décision de diminuer la capacité du canal, la passerelle déclenche une baisse du niveau de contrôle de flux en autorisant l'émission à une classe de terminaux interdite d'émettre de la liste actuelle suite, choisie aléatoirement dans la liste actuelle, en mettant à jour la liste des classes autorisées à émettre et en notifiant par la voie retour aux terminaux la liste mise à jour des classes autorisées à émettre.

Un exemple d'application de l'invention est la transmission d'un trafic de type SBD IRIDIUM (en anglais Short Burst Data IRIDIUM) sur le canal d'accès à contention qui doit permettre de considérablement diminuer la ressource utilisée sur la voie retour (mode « circuit » pendant toute la durée de la transaction) et le délai de transmission des messages.

De manière générale, le procédé et le système de transmission selon l'invention décrits ci-dessus peuvent être utilisés pour tous les trafics sporadiques tels que les trafics M2M (en anglais « Mobile to Mobile ») et de communication aéronautique (comaéro), et améliorer les performances et lm l'efficacité d'utilisation de la ressource.

Il est à remarquer que l'utilisation d'une convergence partielle permet un gain en performance important en ne nécessitant qu'une modification du logiciel du terminal par l'ajout d'une couche de convergence. Le déploiement peut également être échelonné et réalisé uniquement dans les nouveaux terminaux.

Il est à remarquer qu'en supplément du procédé de contrôle de flux 420 et de manière couplée, un procédé de contrôle de congestion peut être ajouté en étant mis en oeuvre au niveau des terminaux.

De manière avantageuse, en utilisant l'accès à contention en priorité pour la transmission de trafics sporadiques non prédictibles de données (en plus de la signalisation), en fonction de la disponibilité du canal à contention RACH, une meilleure efficacité de l'utilisation de la ressource de transmission ainsi qu'une meilleure Qualité de Service pour ce trafic sont assurés.

En outre, lorsque la ressource de n'est pas ou n'est plus disponible et que l'accès à la demande peut être utilisée pour transmettre ce trafic, l'utilisation d'une convergence partielle requiert seulement des modifications au niveau du terminal, et permet un déploiement échelonné de la convergence totale dans le système.

Une intégration complète des accès à contention et en mode DAMA est réalisée dans le cas de la convergence totale où le choix de l'accès est basée en temps réel sur la disponibilité de la ressource sur les deux canaux.

## Revendications

1. Procédé de transmission sur voie montante de paquets de données ou fragments de paquets depuis un terminal TE parmi une pluralité de terminaux (4, 6, 8) vers une passerelle (12) GW,
les paquets de données ou fragments de paquets étant commutés entre un premier mode d'accès à contention utilisant un canal à contention RACH (20) et un deuxième mode d'accès à réservation sur demande DAMA utilisant un canal réservé sur demande DAMA, et
le canal à contention (20) RACH étant partagé par la pluralité de terminaux (4, 6, 8 ; 202);
le procédé de transmission étant **caractérisé en ce qu'**il comprend les étapes suivantes consistant **en ce que** :
.- dans une première étape (104), le terminal considéré TE reçoit quasiment en temps réel de la passerelle (12) via une voie descendante (34) une ou des informations représentatives des ressources de transmission actuelles allouées au canal à contention (20) RACH et au mode d'accès à réservation sur demande DAMA ;
.- dans une deuxième étape (106), le terminal (4, 6, 8 ;202) TE aiguille les paquets de données ou les fragments de paquets sur le canal à contention (20) RACH via un accès à contention ou un canal réservé sur demande (22) via un accès à la demande DAMA en fonction de la taille des paquets et de leur classe de service, et des informations représentatives des ressources de transmission actuelles allouées au canal à contention RACH et au mode d'accès à réservation sur demande DAMA,
Les informations représentatives des ressources de transmission actuelles allouées étant fournies et transmises aux terminaux (4, 6, 8) de la pluralité sur une voie retour (34).

2. Procédé de transmission sur voie aller de paquets de données ou de fragments de paquets selon la revendication 1, dans lequel la deuxième étape comprend
Une troisième étape (108) de mise en oeuvre d'une classification et d'un premier aiguillage des paquets au cours de laquelle le terminal classifie les paquets en fonction de leur taille et de leur classe de service en termes de qualité de service (QoS) et aiguille les paquets en fonction de cette classification soit vers un premier ensemble uniforme de files d'attentes connectées exclusivement à l'accès à la demande, soit vers un deuxième ensemble mixte de files d'attentes connectables séparément et sélectivement dans le temps à l'un des deux accès pris parmi l'accès à contention RA et l'accès à la demande DAMA.

3. Procédé de transmission sur voie aller de paquets de données ou de fragments de paquets selon l'une quelconque des revendications 1 à 2, dans lequel le terminal (202) aiguille prioritairement les paquets de données courts de faible volume de données correspondant à un trafic sporadique sur le canal à contention RACH.

4. Procédé de transmission sur voie aller de paquets de données ou de fragments de paquets selon l'une quelconque des 2 à 3, dans lequel la deuxième étape (106) comprend
Une quatrième étape (110) consécutive à la troisième étape (108) au cours de laquelle
les paquets, délivrés en sortie des files d'attente du deuxième ensemble mixte, sont fragmentés (112) en un ou plusieurs fragments de paquets en fonction de la taille des paquets, puis
les paquets ou les fragments de paquets sont ordonnancés (114) en fonction des priorités respectives, associées aux paquets et déterminée par les classes de qualité de service desdits paquets, puis
les paquets ou les fragments de paquets sont pré-affectés (116) au travers d'une information de pré-affectation de mode d'accès, sur un mode d'accès, pris parmi le mode d'accès RA et le mode d'accès DAMA, en fonction des informations représentatives des ressources de transmission actuelles allouées et d'un type de convergence prédéterminé, pris parmi une convergence partielle et une convergence totale, puis
les paquets ou les fragments de paquets sont encapsulés (118) suivant un protocole d'encapsulation qui dépend du type de convergence, puis
les paquets ou les fragments de paquets sont aiguillés (120) sur l'un des deux accès pris parmi l'accès à contention RA et l'accès à la demande DAMA en fonction du mode d'accès pré-affecté.

5. Procédé de transmission sur voie aller de paquets de données ou de fragments de paquets selon la revendication 4, dans lequel
Lorsque le type de convergence est une convergence partielle,
Le protocole d'encapsulation utilisé est un protocole classique qui n'identifie pas de manière non ambiguë les fragments des paquets, et qui est transparent vis à vis de la passerelle agissant en tant que récepteur, et
Lorsque le mode d'accès à contention RA dispose de ressources disponibles, les paquets ou les fragments de paquets issus du deuxième ensemble mixte après fragmentation utilisent prioritairement l'accès à contention RA; et
Lorsque le mode d'accès à contention RA ne dispose plus de ressources disponibles, les paquets ou les fragments des paquets issus du deuxième ensemble mixte après fragmentation sont redirigés vers le mode d'accès à la demande DAMA; et
Lorsqu'une commutation depuis le mode d'accès RA vers le mode d'accès DAMA a lieu, le paquet ou les fragments du paquet en cours d'envoi sur le mode d'accès RA avant la commutation sont intégralement retransmis sur l'accès à la demande DAMA.

6. Procédé de transmission sur voie aller de paquets de données ou de fragments de paquets selon la revendication 5, dans lequel
lorsque le type de convergence est une convergence partielle, un mécanisme de type ARQ (Automatic Repeat reQuest) est implémenté au niveau de la couche de convergence mise en oeuvre dans la quatrième étape.

7. Procédé de transmission sur voie aller de paquets de données ou de fragments de paquets selon la revendication 3, dans lequel
lorsque le type de convergence est une convergence totale,
le protocole d'encapsulation utilisé est un protocole d'encapsulation configuré pour identifier de manière non ambiguë le contenu de chaque fragment d'un paquet issu du deuxième ensemble mixte au travers d'une information d'identification du contenu de chaque fragment d'un paquet ; et
le mode d'accès de chaque fragment de paquet est sélectionné en fonction de la prochaine opportunité de transmission sur un des deux accès, la prochaine opportunité de transmission étant l'instant le plus proche de l'instant actuel parmi l'instant de la prochaine émission sur le canal RACH, et l'instant de mise à disposition de ressource(s) éventuellement déjà assignée(s) sur l'accès DAMA.

8. Procédé de transmission sur voie aller de paquets de données ou de fragments de paquets selon la revendication 7, dans lequel
lorsque le type de convergence est une convergence totale, le protocole d'encapsulation utilisé est :
soit un protocole d'encapsulation classique modifié en termes de l'utilisation d'une réserve de bits de signalisation, existante dans un champ de la trame du protocole non utilisé classiquement,
soit un protocole d'encapsulation classique augmenté dans lequel un champ de bit a été ajouté au champ de bits existants du protocole,
soit un nouveau protocole.

9. Procédé de transmission sur voie aller de paquets de données ou fragments de paquets selon la revendication 1 à 8, dans lequel
les informations représentatives des ressources de transmission actuelles allouées au canal à contention RACH sont obtenues à partir d'une première probabilité estimée de réception d'une salve attendue vide Pₑ, ou d'une paire de probabilités estimées formée par la première probabilité mesurée Pe et une deuxième probabilité de réception d'une salve vide Pₛ, ou d'une troisième probabilité estimées d'une salve ayant subi une collision P_{c};
les probabilités Pe seule, ou Pe et Ps, ou Pc seule étant estimées continu par la passerelle GW, sur une fenêtre d'observation de largeur prédéfinie et à partir de mesures en réception dans ladite fenêtre d'observation des salves attendues ; et
la troisième étape faisant partie du procédé de transmission et étant exécutée avant la première étape.

10. Procédé de transmission sur voie aller de paquets de données ou de fragments de paquets selon l'une quelconque des revendications 1 à 9, dans lequel
les informations représentatives des ressources de transmission actuelles allouées au canal à contention RACH sont comprises dans l'ensemble formé par
la composition actuelle du canal à contention et/ou la liste actuelle des classes de terminaux autorisées à émettre et des classes de terminaux non autorisées à émettre ; et
les probabilités estimée Pe seule, ou Pe et Ps, ou Pc seule ; et
la charge externe d'entrée du canal RACH estimée à partir de la probabilité estimée Pe.

11. Procédé de transmission sur voie montante de paquets de données ou de fragments de paquets selon l'une quelconque des revendications 1 à 10, comprenant en outre un procédé d'adaptation dynamique (404) de la capacité du canal à contention,
le procédé d'adaptation dynamique de la capacité (404) étant **caractérisé en ce qu'**il comprend les étapes suivantes :
.- dans une première étape (406), fixer la valeur d'une charge externe souhaitée en tant que point de fonctionnement nominal du canal, la charge externe réelle du canal étant égale au taux actuel de nouveaux terminaux entrants émettant une salve respective de données sur le canal ;
.- dans une deuxième étape (408), estimer en continu sur une fenêtre d'observation de largeur prédéfinie et à partir de mesures en réception dans ladite fenêtre d'observation des salves attendues une première probabilité mesurée de réception d'une salve attendue vide Pe, ou une paire de probabilités mesurées formée par la première probabilité mesurée Pe et une deuxième probabilité mesurée de réception réussie d'une salve Ps, ou une troisième probabilité mesurée d'une salve ayant subi une collision Pc ;
.- dans une troisième étape (410), déterminer à l'aide d'un modèle mathématique ou d'une simulation, un premier seuil supérieur S_{H} et un deuxième seuil inférieur S_{L} d'une grandeur Gr sensible de manière monotone à la charge externe du canal à contention, les charges externes du canal à contention supérieure et inférieure correspondant respectivement au premier seuil supérieur ou deuxième seuil inférieur, la grandeur sensible Gr dépendant de la première probabilité Pe ou de la troisième probabilité Pc ou de la paire des probabilités (Pe, Ps) et du type et de paramètres définissant le protocole d'accès à contention;
.- dans une quatrième étape (412), déterminer la grandeur sensible actuelle fonction d'une ou des deux probabilités mesurées ;
.- dans une cinquième étape (414) de prise de décision,
lorsqu'un franchissement du premier seuil supérieur par la grandeur sensible actuelle a lieu une fois ou plusieurs fois consécutives en s'éloignant de la valeur de la grandeur correspondant à la charge externe nominale, augmenter la capacité actuelle du canal de transmission en libérant des ressources de communication supplémentaires en termes de fréquences supplémentaires et en informant par une voie retour les terminaux de la nouvelle composition du canal de transmission à capacité augmentée ; et/ou
lorsqu'un franchissement du deuxième seuil inférieur a lieu par la grandeur sensible actuelle une fois ou plusieurs fois consécutives en s'éloignant de la valeur de la grandeur correspondant à la charge externe nominale, diminuer la capacité actuelle du canal de transmission en retirant des ressources de communication en termes de fréquences parmi les ressources de transmission mis actuellement à disposition et en informant par la voie retour les terminaux de la nouvelle composition du canal de transmission à capacité diminuée.

12. Procédé de transmission sur voie aller de paquets de données ou de fragments de paquets selon la revendication 11, comprenant en outre un procédé de contrôle de flux (420), couplé audit procédé d'adaptation de capacité (404) et qui comprend les étapes suivantes consistant en ce que :
.- la passerelle fournit (422) une liste actuelle de classes de terminaux distinguant les classes des terminaux autorisés à émettre et les classes des terminaux auxquels l'émission est interdite, et
.- lorsque le franchissement du premier seuil supérieur S_{H} induit une décision d'augmenter la capacité du canal et qu'une taille maximale prédéterminée du canal est atteinte, la passerelle déclenche (424) une augmentation du niveau de contrôle de flux en interdisant l'émission à une classe de terminaux autorisée à émettre de la liste actuelle choisie aléatoirement dans la liste actuelle, en mettant à jour la liste des classes autorisées à émettre et en notifiant par la voie retour aux terminaux la liste mise à jour des classes autorisées à émettre ; et
.- lorsque le franchissement du deuxième seuil inférieur S_{L} induit une décision de diminuer la capacité du canal, la passerelle déclenche (424) une baisse du niveau de contrôle de flux en autorisant l'émission à une classe de terminaux interdite d'émettre de la liste actuelle suite, choisie aléatoirement dans la liste actuelle, en mettant à jour la liste des classes autorisées à émettre et en notifiant par la voie retour aux terminaux la liste mise à jour des classes autorisées à émettre.

13. Système de transmission de paquets de données ou de fragments de paquets, comprenant une pluralité de terminaux utilisateur (4, 6, 8) et une passerelle de connexion (12) GW à un deuxième réseau,
Chaque terminal (4, 6, 8) étant configuré pour transmettre à la passerelle (12) GW sur une voie montante (24) des paquets de données ou fragments de paquets, commutés entre un premier mode d'accès à contention utilisant un canal à contention tramé RACH partagé par la pluralité de terminaux et un deuxième mode d'accès à réservation sur demande DAMA utilisant un canal réservé sur demande DAMA ;
le système de transmission étant **caractérisé en ce que**
chaque terminal (4, 6, 8) est configuré pour recevoir quasiment en temps réel de la passerelle via une voie retour une ou des informations représentatives des ressources de transmission actuelles allouées au canal à contention RACH et au mode d'accès à réservation sur demande DAMA ;
chaque terminal (4, 6, 8) est configuré pour aiguiller les paquets de données ou les fragments de paquets sur le canal à contention RACH via un accès à contention ou un canal réservé sur demande via un accès à la demande DAMA en fonction de la taille des paquets et de leur classe de service, et des informations représentatives des ressources de transmission actuelles allouées au canal à contention RACH et au mode d'accès à réservation sur demande DAMA,
Les informations représentatives des ressources de transmission actuelles allouées étant fournies et transmises aux terminaux de la pluralité sur une voie retour.

14. Système de transmission de paquets de données ou de fragments de paquets selon la revendication 13, dans lequel
La passerelle de connexion GW (12) est configurée pour mettre en oeuvre les étapes consistant à
estimer en continu sur une fenêtre d'observation de largeur prédéfinie et à partir de mesures en réception dans ladite fenêtre d'observation des salves attendues une première probabilité mesurée de réception d'une salve attendue vide Pe, ou une paire de probabilités mesurées formée par la première probabilité mesurée Pe et une deuxième probabilité mesurée de réception réussie d'une salve Ps, ou une troisième probabilité mesurée d'une salve ayant subi une collision Pc ;
déterminer une grandeur actuelle Gr sensible de manière monotone à la charge externe du canal à contention RACH à partir de la première probabilité estimée Pe ou de la troisième probabilité Pc ou de la paire des probabilités (Pe, Ps) et des paramètres définissant le protocole d'accès à contention; puis
lorsqu'un franchissement d'un premier seuil supérieur S_{H} par la grandeur actuelle a lieu une fois ou plusieurs fois consécutives en s'éloignant de la valeur de la grandeur correspondant à la charge externe nominale, augmenter la capacité actuelle du canal de transmission en libérant des ressources de communication supplémentaires en termes de fréquences supplémentaires et en informant par une voie retour les terminaux de la nouvelle composition du canal de transmission à capacité augmentée ; et/ou
lorsqu'un franchissement du deuxième seuil inférieur S_{L} a lieu par la grandeur sensible actuelle une fois ou plusieurs fois consécutives en s'éloignant de la valeur de la grandeur correspondant à la charge externe nominale, diminuer la capacité actuelle du canal de transmission en retirant des ressources de communication en termes de fréquences parmi les ressources de transmission mis actuellement à disposition et en informant par la voie retour les terminaux de la nouvelle composition du canal de transmission à capacité diminuée.

15. Système de transmission de paquets de données ou de fragments de paquets selon la revendication 14, dans lequel
La passerelle de connexion (12) et les terminaux (4, 6, 8) sont configurés pour mettre en oeuvre un mécanisme de contrôle de flux et un mécanisme de contrôle de congestion au travers de la fourniture régulière et fréquente par la passerelle de connexion d'une liste actuelle de classes de terminaux autorisées à émettre et de classes de terminaux non autorisé à émettre.

16. Terminal de transmission sur une voie montante de paquets de données ou fragments de paquets de paquets de données ou fragments de paquets, commutés entre un premier mode d'accès à contention utilisant un canal à contention RACH et un deuxième mode d'accès à réservation sur demande DAMA utilisant un canal réservé sur demande DAMA,
Le terminal (202) étant **caractérisé en ce qu'**il comporte :
.- un premier accès (204) à contention RA et un deuxième accès (206) à la demande DAMA comportant respectivement une première file d'attente RA (230) connectée à une première borne de sortie (232) d'accès RA et une deuxième file d'attente DAMA (234) connectée à une deuxième borne de sortie (236) DAMA ; et
.- un premier ensemble (208) uniforme de files d'attentes connectées exclusivement au deuxième accès à la demande (206); et
.- un deuxième ensemble (218) mixte de files d'attentes connectables séparément et sélectivement dans le temps à l'un des deux accès pris parmi le premier accès à contention RA (204) et le deuxième accès à la demande (206) DAMA ; et
.- une unité (228) de classification et de premier aiguillage des paquets, configurée pour classifier les paquets en fonction de leur taille et de leur classe de service en termes de qualité de service (QoS), et aiguiller les paquets en fonction de cette classification soit vers le premier ensemble uniforme de files d'attentes, soit vers le deuxième ensemble mixte de files d'attentes ; et **en ce que**
le terminal (202) est configuré pour recevoir quasiment en temps réel de la passerelle via une voie retour une ou des informations représentatives des ressources de transmission actuelles allouées au canal à contention RACH et au mode d'accès à réservation sur demande DAMA ; et
le terminal (202) est configuré pour aiguiller les paquets de données ou les fragments de paquets sur le canal à contention RACH via l'accès à contention ou un canal réservé sur demande via un accès à la demande DAMA en fonction de la taille des paquets et de leur classe de service, et des informations représentatives des ressources de transmission actuelles allouées au canal à contention RACH et au mode d'accès à réservation sur demande DAMA,
les informations représentatives des ressources de transmission actuelles allouées étant fournies et transmises aux terminaux de la pluralité sur une voie retour.

17. Terminal de transmission selon la revendication 16, comportant en outre
.- une unité de traitement et de convergence (242) connectée en amont vers une borne d'entrée (248) des paquets aux premier et deuxième ensemble (208, 218) de files d'attente et en amont aux premier et deuxième accès (204, 208), et
.- un agent de gestion des ressources (244) des accès RA et DAMA connectée entre un port de voie retour de réception de signaux de signalisation et l'unité de traitement et de convergence,
L'agent de gestion (244) de ressources des accès étant configuré pour :
. * surveiller les informations représentatives des ressources de transmission actuelles disponibles sur le canal à contention RACH et sur le mode d'accès à la demande DAMA, et
. * initier des requête de ressources en fonction du remplissage des files d'attente des premier et deuxième ensembles ;
Le module de traitement et de convergence étant configuré pour :
. * fragmenter les paquets, délivrés en sortie des files d'attente du deuxième ensemble mixte, en un ou plusieurs fragments de paquets en fonction de la taille des paquets, puis
. * ordonnancer les paquets ou les fragments de paquets en fonction des priorités respectives, associées aux paquets et déterminée par les classes de qualité de service desdits paquets, puis
. * pré-affecter les paquets ou les fragments de paquets au travers d'une information de pré-affectation de mode d'accès, sur un mode d'accès, pris parmi le premier accès RA et le deuxième accès DAMA, en fonction d'informations représentatives des ressources de transmission actuelles allouées aux accès RA et DAMA et d'un type de convergence prédéterminé, pris parmi une convergence partielle et une convergence totale, puis
. * encapsuler les paquets ou les fragments de paquets suivant un protocole d'encapsulation qui dépend du type de convergence, puis
. * aiguiller les paquets ou les fragments de paquets sur l'un des deux accès pris parmi l'accès à contention RA et l'accès à la demande DAMA en fonction du mode d'accès pré-affecté.

18. Programme d'ordinateur comportant des instructions pour la mise en oeuvre du procédé de transmission défini selon l'une quelconque des revendications 1 à 13, lorsque le programme est exécuté par un ordinateur.

## Patentansprüche

1. Verfahren zur Übertragung von Datenpaketen oder Paketfragmenten auf einem Aufwärtskanal von einem Terminal TE aus einer Vielzahl von Terminals (4, 6, 8) zu einem Gateway (12) GW, wobei die Datenpakete oder Paketfragmente zwischen einem ersten gemeinsamen Direktzugriffsmodus unter Verwendung eines gemeinsamen Direktzugriffskanals RACH (20) und einem zweiten bedarfsgesteuerten Mehrfachzugriffsmodus DAMA unter Verwendung eines bedarfsgesteuerten Mehrfachzugriffskanals DAMA geschaltet werden, und wobei der gemeinsame Direktzugriffskanal (20) RACH von der Vielzahl von Terminals (4, 6, 8; 202) geteilt wird;
wobei das Verfahren zur Übertragung **dadurch gekennzeichnet ist, dass** es die folgenden Schritte umfasst, die aus Folgendem bestehen:
in einem ersten Schritt (104) empfängt das in Betracht kommende Terminal TE quasi in Echtzeit von dem Gateway (12) über einen Abwärtskanal (34) eine Information oder Informationen, welche die aktuellen Übertragungsressourcen darstellen, die dem gemeinsamen Direktzugriffskanal (20) RACH und dem bedarfsgesteuerten Mehrfachzugriffsmodus DAMA zugewiesen sind;
in einem zweiten Schritt (106) leitet das Terminal (4, 6, 8; 202) TE die Datenpakete oder die Paketfragmente auf dem gemeinsamen Direktzugriffskanal (20) RACH über einen gemeinsamen Direktzugriff oder einen bedarfsgesteuerten Mehrfachzugriffskanal (22) über einen bedarfsgesteuerten Mehrfachzugriff DAMA, abhängig von der Größe der Pakete und ihrer Serviceklasse, und den Informationen, welche die aktuellen Übertragungsressourcen darstellen, die dem gemeinsamen Direktzugriffskanal RACH und dem bedarfsgesteuerten Mehrfachzugriffsmodus DAMA zugewiesen sind, wobei die Informationen, welche die aktuellen zugewiesenen Übertragungsressourcen darstellen, den Terminals (4, 6, 8) aus der Vielzahl auf einem Rückkanal (34) bereitgestellt und übertragen werden.

2. Verfahren zur Übertragung von Datenpaketen oder Paketfragmenten auf einem Vorwärtskanal nach Anspruch 1, wobei der zweite Schritt einen dritten Schritt (108) zur Durchführung einer Klassifizierung und einer ersten Leitung von Paketen umfasst, während dessen das Terminal die Pakete abhängig von ihrer Größe und ihrer Serviceklasse in Bezug auf die Servicequalität (QoS) klassifiziert und die Pakete abhängig von dieser Klassifizierung entweder zu einem ersten einheitlichen Satz von Warteschlangen, der ausschließlich mit dem bedarfsgesteuerten Mehrfachzugriff verbunden ist, oder zu einem zweiten gemischten Satz von Warteschlangen, der bezüglich der Zeit einzeln und selektiv mit einem der zwei Zugriffe unter dem gemeinsamen Direktzugriff RA und dem bedarfsgesteuerten Mehrfachzugriff DAMA, verbindbar ist, leitet.

3. Verfahren zur Übertragung von Datenpaketen oder Paketfragmenten auf einem Vorwärtskanal nach einem der Ansprüche 1 bis 2, wobei das Terminal (202) vorrangig die kurzen Datenpakete mit geringem Datenvolumen entsprechend einem sporadischen Verkehr auf dem gemeinsamen Direktzugriffskanal RACH leitet.

4. Verfahren zur Übertragung von Datenpaketen oder Paketfragmenten auf einem Vorwärtskanal nach einem der Ansprüche 2 bis 3, wobei der zweite Schritt (106) einen vierten Schritt (110) im Anschluss an den dritten Schritt (108) umfasst, während dessen die Pakete, ausgegeben von den Warteschlangen des zweiten gemischten Satzes, in ein oder mehrere Paketfragmente fragmentiert (112) werden, abhängig von der Größe der Pakete, die Pakete oder die Paketfragmente dann abhängig von ihren jeweiligen Prioritäten eingeteilt (114) werden, in Verbindung mit den Paketen und bestimmt durch die Servicequalitätsklassen der Pakete, die Pakete oder die Paketfragmente dann durch eine Information der Vorverteilung des Zugriffsmodus auf einen Zugriffsmodus vorverteilt (116) werden unter dem Zugriffsmodus RA und dem Zugriffsmodus DAMA, abhängig von Informationen, welche die aktuellen zugewiesenen Übertragungsressourcen darstellen, und von einem vorbestimmten Konvergenztyp unter einer partiellen Konvergenz und einer vollständigen Konvergenz, die Pakete oder die Paketfragmente dann gemäß einem Verkapselungsprotokoll, das von dem Konvergenztyp abhängt, verkapselt (118) werden, die Pakete oder die Paketfragmente dann auf einen der zwei Zugriffe geleitet (120) werden unter dem gemeinsamen Direktzugriff RA und dem bedarfsgesteuerten Mehrfachzugriff DAMA, abhängig von dem vorverteilten Zugriffsmodus.

5. Verfahren zur Übertragung von Datenpaketen oder Paketfragmenten auf einem Vorwärtskanal nach Anspruch 4, wobei, wenn der Konvergenztyp eine partielle Konvergenz ist, das verwendete Verkapselungsprotokoll ein klassisches Protokoll ist, das die Paketfragmente nicht eindeutig identifiziert, und das transparent gegenüber dem Gateway ist, das als Empfänger handelt, und, wenn der gemeinsame Direktzugriffsmodus RA über verfügbare Ressourcen verfügt, die Pakete oder die Paketfragmente, die nach dem Fragmentieren von dem zweiten gemischten Satz ausgegeben werden, vorrangig den gemeinsamen Direktzugriff RA nutzen; und
wenn der gemeinsame Direktzugriffsmodus RA nicht mehr über verfügbare Ressourcen verfügt, die Pakete oder die Paketfragmente, die nach dem Fragmentieren von dem zweiten gemischten Satz ausgegeben werden, zu dem bedarfsgesteuerten Mehrfachzugriffsmodus DAMA weitergeleitet werden; und
wenn ein Schalten von dem Zugriffsmodus RA zu dem Zugriffsmodus DAMA stattfindet, das Paket oder die Paketfragmente, die vor dem Schalten auf dem Zugriffsmodus RA unterwegs sind, vollständig auf den bedarfsgesteuerten Mehrfachzugriff DAMA übertragen werden.

6. Verfahren zur Übertragung von Datenpaketen oder Paketfragmenten auf einem Vorwärtskanal nach Anspruch 5, wobei, wenn der Konvergenztyp eine partielle Konvergenz ist, auf der im vierten Schritt umgesetzten Konvergenzebene ein Mechanismus des Typs ARQ (Automatic Repeat reQuest) umgesetzt wird.

7. Verfahren zur Übertragung von Datenpaketen oder Paketfragmenten auf einem Vorwärtskanal nach Anspruch 3, wobei, wenn der Konvergenztyp eine vollständige Konvergenz ist, das verwendete Verkapselungsprotokoll ein Verkapselungsprotokoll ist, das konfiguriert ist, um auf eindeutige Weise den Inhalt jedes Fragments eines Pakets zu identifizieren, das von dem zweiten gemischten Satz ausgegeben wird, durch eine Information zum Identifizieren des Inhalts jedes Fragments eines Pakets; und der Zugriffsmodus jedes Paketfragments abhängig von der nächsten Übertragungsgelegenheit auf einem der zwei Zugriffe ausgewählt ist, wobei die nächste Übertragungsgelegenheit der Moment ist, der dem aktuellen Moment am nächsten ist unter dem Moment der nächsten Übertragung auf dem Kanal RACH, und dem Moment, in dem gegebenenfalls bereits zugewiesene(n) Ressource(n) auf dem Zugriff DAMA zur Verfügung gestellt werden.

8. Verfahren zur Übertragung von Datenpaketen oder Paketfragmenten auf einem Vorwärtskanal nach Anspruch 7, wobei, wenn der Konvergenztyp eine vollständige Konvergenz ist, das verwendete Verkapselungsprotokoll Folgendes ist:
entweder ein klassisches Verkapselungsprotokoll, abgewandelt in Bezug auf die Verwendung einer Reserve von Bits zur Signalisierung, vorhanden in einem Feld des Rahmens des Protokolls, das nicht klassisch verwendet wird, oder ein klassisches gesteigertes Verkapselungsprotokoll, in dem ein Bitfeld dem vorhandenen Bitfeld des Protokolls hinzugefügt worden ist, oder ein neues Protokoll.

9. Verfahren zur Übertragung von Datenpaketen oder Paketfragmenten auf einem Vorwärtskanal nach Anspruch 1 bis 8, wobei die Informationen, welche die aktuellen Übertragungsressourcen darstellen, die dem gemeinsamen Direktzugriffskanal RACH zugewiesen sind, durch eine erste geschätzte Wahrscheinlichkeit des Empfangs eines leeren erwarteten Bündels Pₑ, oder ein Paar von geschätzten Wahrscheinlichkeiten gebildet aus der ersten gemessenen Wahrscheinlichkeit Pe und einer zweiten Wahrscheinlichkeit des Empfangs eines leeren Bündels Pₛ, oder eine dritte geschätzte Wahrscheinlichkeit eines Bündels, das eine Kollision erlitten hat, P_{c} erhalten werden;
wobei die Wahrscheinlichkeiten Pe allein, oder Pe und Ps, oder Pc allein kontinuierlich von dem Gateway GW geschätzt werden, in einem Beobachtungsfenster mit vordefinierter Breite und anhand von Maßnahmen beim Empfang von erwarteten Bündeln in dem Beobachtungsfenster; und
wobei der dritte Schritt Teil des Verfahrens zur Übertragung ist und vor dem ersten Schritt durchgeführt wird.

10. Verfahren zur Übertragung von Datenpaketen oder Paketfragmenten auf einem Vorwärtskanal nach einem der Ansprüche 1 bis 9, wobei die Informationen, welche die aktuellen Übertragungsressourcen darstellen, die dem gemeinsamen Direktzugriffskanal RACH zugewiesen sind, in dem Satz, der durch die aktuelle Zusammensetzung des gemeinsamen Direktzugriffskanals gebildet wird, und/oder der aktuellen Liste der Klassen von Terminals, die für die Übertragung autorisiert sind, und der Klassen von Terminals, die nicht für die Übertragung autorisiert sind, enthalten sind; und
die geschätzten Wahrscheinlichkeiten Pe allein, oder Pe und Ps, oder Pc allein; und
die externe Last des Eingangs des Kanals RACH geschätzt anhand der geschätzten Wahrscheinlichkeit Pe.

11. Verfahren zur Übertragung von Datenpaketen oder Paketfragmenten auf einem Aufwärtskanal nach einem der Ansprüche 1 bis 10, ferner umfassend ein Verfahren zur dynamischen Anpassung (404) der Kapazität des gemeinsamen Direktzugriffskanals,
wobei das Verfahren zur dynamischen Anpassung der Kapazität (404) **dadurch gekennzeichnet ist, dass** es die folgenden Schritte umfasst:
- in einem ersten Schritt (406) Festlegen des Wertes einer gewünschten externen Last als nominalen Betriebspunkt des Kanals, wobei die reale externe Last des Kanals gleich der aktuellen Rate neuer eingehender Terminals ist, die ein jeweiliges Datenbündel auf dem Kanal übertragen;
- in einem zweiten Schritt (408) kontinuierliches Schätzen, in einem Beobachtungsfenster mit vordefinierter Breite und anhand von Maßnahmen beim Empfang von erwarteten Bündeln in dem Beobachtungsfenster, einer ersten Wahrscheinlichkeit, gemessen beim Empfang eines erwarteten leeren Bündels, Pe, oder eines Paares von gemessenen Wahrscheinlichkeiten, gebildet aus der ersten gemessenen Wahrscheinlichkeit Pe und einer zweiten gemessenen Wahrscheinlichkeit des erfolgreichen Empfangs eines Bündels Ps, oder einer dritten gemessenen Wahrscheinlichkeit eines Bündels, das eine Kollision erlitten hat, Pc;
- in einem dritten Schritt (410) Bestimmen, mit Hilfe eines mathematischen Modells oder einer Simulation, einer ersten oberen Schwelle S_{H} und einer zweiten unteren Schwelle S_{L} einer sensiblen Größe Gr auf monotone Weise bei externer Last des gemeinsamen Direktzugriffskanals, wobei die externen Lasten des gemeinsamen oberen und unteren Direktzugriffskanals jeweils der ersten oberen Schwelle oder der zweiten unteren Schwelle entsprechen, wobei die sensible Größe Gr von der ersten Wahrscheinlichkeit Pe oder der dritten Wahrscheinlichkeit Pc oder von dem Paar von Wahrscheinlichkeiten (Pe, Ps) und dem Typ und den Parametern, die das Protokoll zum gemeinsamen Direktzugriff definieren, abhängt;
in einem vierten Schritt (412) Bestimmen der aktuellen sensiblen Größe abhängig von einer oder zwei gemessenen Wahrscheinlichkeiten;
in einem fünften Schritt (414) der Entscheidungsfindung, wenn eine Überschreitung der ersten oberen Schwelle um die aktuelle sensible Größe ein Mal oder mehrere Male aufeinanderfolgend stattfindet, weg von dem Wert der Größe entsprechend der externen nominalen Last, Erhöhen der aktuellen Kapazität des Übertragungskanals durch Freisetzen von ergänzenden Kommunikationsressourcen in Bezug auf ergänzende Frequenzen und indem die Terminals über einen Rückkanal über die neue Zusammensetzung des Übertragungskanals mit erhöhter Kapazität informiert werden; und/oder
wenn eine Überschreitung der zweiten unteren Schwelle um die aktuelle sensible Größe ein Mal oder mehrere Male aufeinanderfolgend stattfindet, weg von dem Wert der Größe entsprechend der externen nominalen Last, Reduzieren der aktuellen Kapazität des Übertragungskanals durch Zurückziehen der Kommunikationsressourcen in Bezug auf Frequenzen unter den aktuell zur Verfügung gestellten Übertragungsressourcen und indem die Terminals über den Rückkanal über die neue Zusammensetzung des Übertragungskanals mit reduzierter Kapazität informiert werden.

12. Verfahren zur Übertragung von Datenpaketen oder Paketfragmenten auf einem Vorwärtskanal nach Anspruch 11, ferner umfassend ein Verfahren zur Flusssteuerung (420), gekoppelt an das Verfahren zur Anpassung der Kapazität (404) und das die folgenden Schritte umfasst, bestehend daraus, dass:
- das Gateway eine aktuelle Liste mit Klassen von Terminals liefert (422), in der die Klassen von Terminals, die für die Übertragung autorisiert sind, und die Klassen von Terminals, die nicht für die Übertragung autorisiert sind, unterschieden werden, und
- wenn die Überschreitung der ersten oberen Schwelle S_{H} eine Entscheidung zur Erhöhung der Kapazität des Kanals veranlasst und eine maximale vorbestimmte Größe des Kanals erreicht ist, das Gateway eine Erhöhung des Maßes der Flusssteuerung auslöst (424), indem einer Klasse von Terminals, die für die Übertragung autorisiert sind, aus der aktuellen Liste, zufällig ausgewählt in der aktuellen Liste, die Übertragung untersagt wird, durch Aktualisieren der Liste der Klassen, die für die Übertragung autorisiert sind, und indem die Terminals über den Rückkanal über die aktualisierte Liste der Klassen, die für die Übertragung autorisiert sind, benachrichtigt werden; und
- wenn die Überschreitung der zweiten unteren Schwelle S_{L} eine Entscheidung zur Reduzierung der Kapazität des Kanals veranlasst, das Gateway eine Reduzierung des Maßes der Flusssteuerung auslöst (424), indem einer Klasse von Terminals, die nicht für die Übertragung autorisiert sind, aus der weiteren aktuellen Liste, zufällig ausgewählt in der aktuellen Liste, die Übertragung autorisiert wird, durch Aktualisieren der Liste der Klassen, die für die Übertragung autorisiert sind, und indem die Terminals über den Rückkanal über die aktualisierte Liste der Klassen, die für die Übertragung autorisiert sind, benachrichtigt werden.

13. System zur Übertragung von Datenpaketen oder Paketfragmenten, umfassend eine Vielzahl von Benutzerterminals (4, 6, 8) und ein Verbindungs-Gateway (12) GW mit einem zweiten Netz,
wobei jedes Terminal (4, 6, 8) konfiguriert ist, um an das Gateway (12) GW auf einem Aufwärtskanal (24) Datenpakete oder Paketfragmente zu übertragen, geschaltet zwischen einem ersten gemeinsamen Direktzugriffsmodus unter Verwendung eines gerasterten gemeinsamen Direktzugriffskanals RACH geteilt von der Vielzahl von Terminals und einem zweiten bedarfsgesteuerten Mehrfachzugriffsmodus DAMA unter Verwendung eines bedarfsgesteuerten Mehrfachzugriffskanals DAMA;
wobei das System zur Übertragung **dadurch gekennzeichnet ist, dass**
jedes Terminal (4, 6, 8) konfiguriert ist, um quasi in Echtzeit von dem Gateway über einen Rückkanal eine Information oder Informationen zu empfangen, welche die aktuellen Übertragungsressourcen darstellen, die dem gemeinsamen Direktzugriffskanal RACH und dem bedarfsgesteuerten Mehrfachzugriffsmodus DAMA zugewiesen sind;
jedes Terminal (4, 6, 8) konfiguriert ist, um die Datenpakete oder Paketfragmente auf dem gemeinsamen Direktzugriffskanal RACH über einen gemeinsamen Direktzugriff oder einen bedarfsgesteuerten Mehrfachzugriffskanal über einen bedarfsgesteuerten Mehrfachzugriff DAMA abhängig von der Größe der Pakete und ihrer Serviceklasse, und den Informationen, welche die aktuellen Übertragungsressourcen darstellen, die dem gemeinsamen Direktzugriffskanal RACH und dem bedarfsgesteuerten Mehrfachzugriffsmodus DAMA zugewiesen sind, zu leiten, wobei die Informationen, welche die aktuellen zugewiesenen Übertragungsressourcen darstellen, den Terminals aus der Vielzahl auf einem Rückkanal bereitgestellt und übertragen werden.

14. System zur Übertragung von Datenpaketen oder Paketfragmenten nach Anspruch 13, wobei
das Verbindungs-Gateway GW (12) konfiguriert ist, um die folgenden Schritte durchzuführen, bestehend aus dem kontinuierlichen Schätzen, in einem Beobachtungsfenster mit vordefinierter Breite und anhand von Maßnahmen beim Empfang von erwarteten Bündeln in dem Beobachtungsfenster, einer ersten Wahrscheinlichkeit, gemessen beim Empfang eines erwarteten leeren Bündels, Pe, oder eines Paares von gemessenen Wahrscheinlichkeiten, gebildet aus der ersten gemessenen Wahrscheinlichkeit Pe und einer zweiten gemessenen Wahrscheinlichkeit des erfolgreichen Empfangs einer Bündels Ps, oder einer dritten gemessenen Wahrscheinlichkeit eines Bündels, das eine Kollision erlitten hat, Pc;
Bestimmen einer aktuellen sensiblen Größe Gr auf monotone Weise bei der externen Last des gemeinsamen Direktzugriffskanals RACH anhand der ersten geschätzten Wahrscheinlichkeit Pe oder der dritten Wahrscheinlichkeit Pc oder des Paares von Wahrscheinlichkeiten (Pe, Ps) und der Parameter, die das Protokoll zum gemeinsamen Direktzugriff definieren; dann
wenn eine Überschreitung einer ersten oberen Schwelle S_{H} um die aktuelle Größe ein Mal oder mehrere Male aufeinanderfolgend stattfindet, weg von dem Wert der Größe entsprechend der externen nominalen Last, Erhöhen der aktuellen Kapazität des Übertragungskanals durch Freisetzen von ergänzenden Kommunikationsressourcen in Bezug auf ergänzende Frequenzen und indem die Terminals über einen Rückkanal über die neue Zusammensetzung des Übertragungskanals mit erhöhter Kapazität informiert werden; und/oder
wenn eine Überschreitung der zweiten unteren Schwelle S_{L} um die aktuelle sensible Größe ein Mal oder mehrere Male aufeinanderfolgend stattfindet, weg von dem Wert der Größe entsprechend der externen nominalen Last, Reduzieren der aktuellen Kapazität des Übertragungskanals durch Zurückziehen der Kommunikationsressourcen in Bezug auf Frequenzen unter den aktuell zur Verfügung gestellten Übertragungsfrequenzen und indem die Terminals über den Rückkanal über die neue Zusammensetzung des Übertragungskanals mit reduzierter Kapazität informiert werden.

15. System zur Übertragung von Datenpaketen oder Paketfragmenten nach Anspruch 14, wobei das Verbindungs-Gateway (12) und die Terminals (4, 6, 8) konfiguriert sind, um einen Mechanismus zur Flusssteuerung und einen Mechanismus zur Steuerung von Stau durch die regelmäßige und häufige Sendung einer aktuellen Liste von Klassen von Terminals, die für die Übertragung autorisiert sind, und Klassen von Terminals, die nicht für die Übertragung autorisiert sind, durch das Verbindungs-Gateway umzusetzen.

16. Terminal zur Übertragung von Datenpaketen oder Paketfragmenten von Datenpaketen oder Paketfragmenten auf einem Aufwärtskanal, geschaltet zwischen einem ersten gemeinsamen Direktzugriffsmodus unter Verwendung eines gemeinsamen Direktzugriffskanals RACH und einem zweiten bedarfsgesteuerten Mehrfachzugriffsmodus DAMA unter Verwendung eines bedarfsgesteuerten Mehrfachzugriffskanals DAMA, wobei das Terminal (202) **dadurch gekennzeichnet ist, dass** es Folgendes umfasst:
- einen ersten gemeinsamen Direktzugriff (204) RA und einen zweiten bedarfsgesteuerten Mehrfachzugriff (206) DAMA, jeweils umfassend eine erste Warteschlange RA (230), die mit einer ersten Ausgangsklemme (232) des Zugriffs RA verbunden ist, und eine zweite Warteschlange DAMA (234), die mit einer zweiten Ausgangsklemme (236) DAMA verbunden ist; und
- einen ersten einheitlichen Satz (208) von Warteschlangen, der ausschließlich mit dem zweiten bedarfsgesteuerten Mehrfachzugriff (206) verbunden ist; und
- einen zweiten gemischten Satz (218) von Warteschlangen, der bezüglich der Zeit einzeln und selektiv mit einem der zwei Zugriffe unter dem ersten gemeinsamen Direktzugriff RA (204) und dem zweiten bedarfsgesteuerten Mehrfachzugriff (206) DAMA verbindbar ist; und
- eine Einheit (228) zur Klassifizierung und zur ersten Leitung der Pakete, die konfiguriert ist, um die Pakete abhängig von ihrer Größe und ihrer Serviceklasse in Bezug auf die Servicequalität (QoS) zu klassifizieren und die Pakete abhängig von dieser Klassifizierung entweder zu dem ersten einheitlichen Satz von Warteschlangen oder zu dem zweiten gemischten Satz von Warteschlangen zu leiten; wobei das Terminal (202) konfiguriert ist, um quasi in Echtzeit von dem Gateway über einen Rückkanal eine Information oder Informationen zu empfangen, welche die aktuellen Übertragungsressourcen darstellen, die dem gemeinsamen Direktzugriffskanal RACH und dem bedarfsgesteuerten Mehrfachzugriffsmodus DAMA zugewiesen sind; und
das Terminal (202) konfiguriert ist, um die Datenpakete oder Paketfragmente auf dem gemeinsamen Direktzugriffskanal RACH über den gemeinsamen Direktzugriff oder einem bedarfsgesteuerten Mehrfachzugriffskanal über einen bedarfsgesteuerten Mehrfachzugriff DAMA abhängig von der Größe der Pakete und ihrer Serviceklasse, und den Informationen, welche die aktuellen Übertragungsressourcen darstellen, die dem gemeinsamen Direktzugriffskanal RACH und dem bedarfsgesteuerten Mehrfachzugriffsmodus DAMA zugewiesen sind, zu leiten, wobei die Informationen, welche die aktuellen zugewiesenen Übertragungsressourcen darstellen, den Terminals aus der Vielzahl auf einem Rückkanal bereitgestellt und übertragen werden.

17. Terminal zur Übertragung nach Anspruch 16, ferner umfassend
- eine Behandlungs- und Konvergenzeinheit (242), die vorgelagert in Richtung einer Eingangsklemme (248) von Paketen des ersten und zweiten Satzes (208, 218) von Warteschlangen und vorgelagert mit dem ersten und zweiten Zugriff (204, 208) verbunden ist, und
- einen Ressourcenverwalter (244) für den RA- und DAMA-Zugriff, der zwischen einem Rückkanalanschluss für den Empfang von Signalisierungssignalen und der Behandlungs- und Konvergenzeinheit verbunden ist, wobei der Ressourcenverwalter (244) für den Zugriff für Folgendes konfiguriert ist:
* Überwachen der Informationen, welche die aktuellen verfügbaren Übertragungsressourcen auf dem gemeinsamen Direktzugriffskanal RACH und auf dem bedarfsgesteuerten Mehrfachzugriffsmodus DAMA darstellen, und
* Initiieren von Anfragen von Ressourcen abhängig von der Füllung der Warteschlangen des ersten und zweiten Satzes;
wobei das Behandlungs- und Konvergenzmodul für Folgendes konfiguriert ist:
* Fragmentieren der Pakete, ausgegeben von den Warteschlangen des zweiten gemischten Satzes, in ein oder mehrere Paketfragmente abhängig von der Größe der Pakete, dann
* Einteilen der Pakete oder Paketfragmente abhängig von ihren jeweiligen Prioritäten in Verbindung mit den Paketen und bestimmt durch die Servicequalitätsklassen der Pakete, dann
* Vorverteilen der Pakete oder der Paketfragmente durch eine Information der Vorverteilung des Zugriffsmodus auf einen Zugriffsmodus unter dem ersten Zugriff RA und dem zweiten Zugriff DAMA, abhängig von Informationen, welche die aktuellen zugewiesenen Übertragungsressourcen für den Zugriff RA und DAMA darstellen, und von einem vorbestimmten Konvergenztyp unter einer partiellen Konvergenz und einer vollständigen Konvergenz, dann
* Verkapseln der Pakete oder der Paketfragmente gemäß einem Verkapselungsprotokoll, das von dem Konvergenztyp abhängt, dann
* Leiten der Pakete oder der Paketfragmente auf einen der zwei Zugriffe unter dem gemeinsamen Direktzugriff RA und dem bedarfsgesteuerten Mehrfachzugriff DAMA, abhängig von dem vorverteilen Zugriffsmodus.

18. Computerprogramm, Anweisungen für die Durchführung des Verfahrens zur Übertragung nach einem der Ansprüche 1 bis 13 enthaltend, wenn das Programm von einem Computer ausgeführt wird.

## Claims

1. Method for transmission over an uplink of data packets or packet fragments from a terminal TE out of a plurality of terminals (4, 6, 8) to a gateway (12) GW,
the data packets or packet fragments being switched between a first contention access mode using a contention access channel RACH (20) and a second demand assigned multiple access DAMA mode using a demand assigned multiple access DAMA channel, and
the contention access channel (20) RACH being shared by the plurality of terminals (4, 6, 8; 202);
the transmission method being **characterised in that** it comprises the following steps in which:
.- in a first step (104), the terminal concerned TE receives, almost in real time from the gateway (12) via a downlink (34), one or more information items representative of the current transmission resources allocated to the contention access channel (20) RACH and to the demand assigned multiple access DAMA mode;
.- in a second step (106), the terminal (4, 6, 8; 202) TE routes the data packets or the packet fragments over the contention access channel (20) RACH via a contention access or a demand assigned multiple access channel (22) via a demand assigned multiple access DAMA according to the size of the packets and their class of service, and information items representative of the current transmission resources allocated to the contention access channel RACH and to the demand assigned multiple access DAMA mode,
the information items representative of the current transmission resources allocated being supplied and transmitted to the terminals (4, 6, 8) of the plurality over a return link (34).

2. Method for transmission over a forward link of data packets or packet fragments according to claim 1, in which the second step comprises
a third step (108) of implementation of a classification and of a first routing of the packets during which the terminal classifies the packets according to their size and their class of service in terms of quality of service (QoS) and routes the packets according to this classification either to a uniform first set of queues connected exclusively to the demand assigned multiple access, or to a mixed second set of queues which can be connected separately and selectively in terms of time to one of the two accesses taken from the contention access RA and the demand assigned multiple access DAMA.

3. Method for transmission over a forward link of data packets or packet fragments according to either claim 1 or 2, in which the terminal (202) prioritises the routing of the short data packets of low data volume corresponding to sporadic traffic over the contention access channel RACH.

4. Method for transmission over a forward link of data packets or packet fragments according to either claim 2 or 3, in which the second step (106) comprises
a fourth step (110) consecutive to the third step (108) during which
the packets, delivered at the output of the queues of the mixed second set, are fragmented (112) into one or more packet fragments according to the size of the packets, then
the packets or the packet fragments are scheduled (114) according to the respective priorities associated with the packets and determined by the quality of service classes of said packets, then
the packets or the packet fragments are pre-assigned (116), through an access mode pre-assignment information item, to an access mode, taken from the RA access mode and the DAMA access mode, according to the information items representative of the current transmission resources allocated and a predetermined convergence type, taken from a partial convergence and a total convergence, then
the packets or the packet fragments are encapsulated (118) according to an encapsulation protocol which depends on the convergence type, then
the packets or the packet fragments are routed (120) to one of the two accesses taken from the contention access RA and the demand assigned multiple access DAMA according to the pre-assigned access mode.

5. Method for transmission over a forward link of data packets or packet fragments according to claim 4, in which,
when the convergence type is a partial convergence,
the encapsulation protocol used is a conventional protocol which does not unambiguously identify the fragments of the packets and which is transparent to the gateway acting as receiver, and,
when the contention access RA mode has resources available, the packets or the packet fragments deriving from the mixed second set after fragmentation use the contention access RA as a priority; and,
when the contention access RA mode has no more resources available, the packets or the packet fragments deriving from the mixed second set after fragmentation are redirected to the demand assigned multiple access DAMA mode; and,
when a switchover from the RA contention access mode to the DAMA access mode occurs, the packet or the packet fragments currently being sent over the RA access mode before the switchover are all retransmitted over the demand assigned multiple access DAMA.

6. Method for transmission over a forward link of data packets or packet fragments according to claim 5, in which,
when the convergence type is a partial convergence, a mechanism of ARQ (Automatic Repeat reQuest) type is implemented in the convergence layer implemented in the fourth step.

7. Method for transmission over a forward link of data packets or packet fragments according to claim 3, in which,
when the convergence type is a total convergence,
the encapsulation protocol used is an encapsulation protocol configured to unambiguously identify the content of each fragment of a packet deriving from the mixed second set through an information item identifying the content of each fragment of a packet; and
the access mode of each packet fragment is selected according to the next opportunity for transmission over one of the two accesses, the next opportunity for transmission being the time closest to the current time out of the time of the next transmission over the RACH channel, and the time at which the resource(s) possibly already assigned over the DAMA access become(s) available.

8. Method for transmission over a forward link of data packets or packet fragments according to claim 7, in which,
when the convergence type is a total convergence, the encapsulation protocol used is:
a conventional encapsulation protocol modified in terms of the use of a reserve of signalling bits, existing in a field of the frame of the protocol not conventionally used,
or an augmented conventional encapsulation protocol in which a bit field has been added to the field of existing bits of the protocol,
or a new protocol.

9. Method for transmission over a forward link of data packets or packet fragments according to claims 1 to 8, in which
the information items representative of the current transmission resources allocated to the contention access channel RACH are obtained from a first estimated probability Pₑ of reception of an empty expected burst, or from a pair of estimated probabilities formed by the measured first probability Pe and a second probability Pₛ of reception of an empty burst, or from a third estimated probability P_{c} of a burst having undergone a collision;
the probabilities Pe alone, or Pe and Ps, or Pc alone being estimated continuously by the gateway GW, over an observation window of predefined width and from measurements being received in said observation window of the expected bursts; and
the third step forming part of the transmission method and being executed before the first step.

10. Method for transmission over a forward link of data packets or packet fragments according to any one of claims 1 to 9, in which
the information items representative of the current transmission resources allocated to the contention access channel RACH are contained in the set formed by
the current composition of the contention access channel and/or the current list of the classes of terminals authorised to transmit and of the classes of terminals not authorised to transmit; and
the estimated probabilities Pe alone, or Pe and Ps, or Pc alone; and
the external input load of the RACH channel estimated from the estimated probability Pe.

11. Method for transmission over an uplink of data packets or packet fragments according to any one of claims 1 to 10, further comprising a method (404) for dynamically adapting the capacity of the contention access channel,
the method (404) for dynamically adapting the capacity being **characterised in that** it comprises the following steps:
.- in a first step (406), setting the value of a desired external load as the nominal operating point of the channel, the real external load of the channel being equal to the current rate of new terminals coming online transmitting a respective burst of data over the channel;
.- in a second step (408), continuously estimating, over an observation window of predefined width and from measurements being received in said observation window of the expected bursts, a first measured probability of reception of an empty expected burst Pe, or a pair of measured probabilities formed by the first measured probability Pe and a second measured probability of successful reception of a burst Ps, or a third measured probability of a burst having undergone a collision Pc;
.- in a third step (410), determining, using a mathematical model or a simulation, an upper first threshold S_{H} and a lower second threshold S_{L} of a quantity Gr monotonically sensitive to the external load of the contention access channel, the upper and lower external loads of the contention access channel corresponding to the upper first threshold or lower second threshold, respectively, the sensitive quantity Gr depending on the first probability Pe or on the third probability Pc or on the pair of probabilities (Pe, Ps) and on the type and parameters defining the contention access protocol;
.- in a fourth step (412), determining the current sensitive quantity as a function of one or both of the measured probabilities;
.- in a decision-making fifth step (414),
when a crossing of the upper first threshold by the current sensitive quantity occurs one or more times consecutively moving away from the value of the quantity corresponding to the nominal external load, increasing the current capacity of the transmission channel by releasing additional communication resources in terms of additional frequencies and by informing the terminals by a return link of the new composition of the transmission channel with increased capacity; and/or
when a crossing of the lower second threshold by the current sensitive quantity occurs one or more times consecutively moving away from the value of the quantity corresponding to the nominal external load, reducing the current capacity of the transmission channel by withdrawing communication resources in terms of frequencies from the transmission resources currently made available and by informing the terminals by the return link of the new composition of the transmission channel with reduced capacity.

12. Method for transmission over a forward link of data packets or packet fragments according to claim 11, further comprising a flow control method (420), coupled to said capacity adaptation method (404) and which comprises the following steps in which:
.- the gateway supplies (422) a current list of classes of terminals distinguishing the classes of the terminals authorised to transmit and the classes of the terminals from which transmission is prohibited, and,
.- when the crossing of the upper first threshold S_{H} induces a decision to increase the capacity of the channel and a predetermined maximum size of the channel is reached, the gateway triggers (424) an increase in the flow control level by prohibiting a class of terminals which is authorised to transmit in the current list and which is chosen randomly from the current list from transmitting by updating the list of the classes authorised to transmit and by notifying the terminals by the return link of the updated list of the classes authorised to transmit; and,
.- when the crossing of the lower second threshold S_{L} induces a decision to reduce the capacity of the channel, the gateway triggers (424) a lowering of the flow control level by allowing a class of terminals which is prohibited from transmitting in the current list and which is chosen randomly from the current list to transmit by updating the list of the classes authorised to transmit and by notifying the terminals by the return link of the updated list of the classes authorised to transmit.

13. System for transmitting data packets or packet fragments comprising a plurality of user terminals (4, 6, 8) and a connection gateway (12) GW to a second network,
each terminal (4, 6, 8) being configured to transmit to the gateway (12) GW over an uplink (24) data packets or packet fragments, switched between a first contention access mode using a slotted contention access channel RACH shared by the plurality of terminals and a second demand assigned multiple access DAMA mode using a demand assigned multiple access DAMA channel;
the transmission system being **characterised in that**
each terminal (4, 6, 8) is configured to receive, almost in real time from the gateway via a return link, one or more information items representative of the current transmission resources allocated to the contention access channel RACH and to the demand assigned multiple access DAMA mode;
each terminal (4, 6, 8) is configured to route the data packets or the packet fragments over the contention access channel RACH via a contention access or a demand assigned multiple access channel via a demand assigned multiple access DAMA according to the size of the packets and their class of service, and information items representative of the current transmission resources allocated to the contention access channel RACH and to the demand assigned multiple access DAMA mode,
the information items representative of the current transmission resources allocated being supplied and transmitted to the terminals of the plurality over a return link.

14. System for transmitting data packets or packet fragments according to claim 13, in which
the connection gateway GW (12) is configured to implement the steps involving continuously estimating, over an observation window of predefined width and from measurements being received in said observation window of the expected bursts, a first measured probability of reception of an empty expected burst Pe, or a pair of measured probabilities formed by the first measured probability Pe and a second measured probability of successful reception of a burst Ps, or a third measured probability of a burst having undergone a collision Pc;
determining a current quantity Gr monotonically sensitive to the external load of the contention access channel RACH from the first estimated probability Pe or from the third probability Pc or from the pair of probabilities (Pe, Ps) and from the parameters defining the contention access protocol; then,
when a crossing of an upper first threshold S_{H} by the current quantity occurs one or more times consecutively moving away from the value of the quantity corresponding to the nominal external load, increasing the current capacity of the transmission channel by releasing additional communication resources in terms of additional frequencies and by informing the terminals by a return link of the new composition of the transmission channel with increased capacity; and/or,
when a crossing of the lower second threshold S_{L} by the current sensitive quantity occurs one or more times consecutively moving away from the value of the quantity corresponding to the nominal external load, reducing the current capacity of the transmission channel by withdrawing communication resources in terms of frequencies from the transmission resources currently made available and by informing the terminals by the return link of the new composition of the transmission channel with reduced capacity.

15. System for transmitting data packets or packet fragments according to claim 14, in which
the connection gateway (12) and the terminals (4, 6, 8) are configured to implement a flow control mechanism and a congestion control mechanism through the regular and frequent supply by the connection gateway of a current list of classes of terminals authorised to transmit and of classes of terminals not authorised to transmit.

16. Terminal for transmitting, over an uplink, data packets or packet fragments of data packets or packet fragments, switched between a first contention access mode using a contention access channel RACH and a second demand assigned multiple access DAMA mode using a demand assigned multiple access DAMA channel,
the terminal (202) being **characterised in that** it comprises:
.- a first contention access (204) RA and a second demand assigned multiple access (206) DAMA comprising a first RA queue (230) connected to a first RA access output terminal (232) and a second DAMA queue (234) connected to a second DAMA output terminal (236), respectively; and
.- a uniform first set (208) of queues connected exclusively to the second demand assigned multiple access (206); and
.- a mixed second set (218) of queues which can be connected separately and selectively in terms of time to one of the two accesses taken from the first contention access RA (204) and the second demand assigned multiple access (206) DAMA; and
.- a unit (228) for classification and first routing of the packets, configured to classify the packets according to their size and their class of service in terms of quality of service (QoS), and to route the packets according to this classification either to the uniform first set of queues or to the mixed second set of queues; and **in that**
the terminal (202) is configured to receive, almost in real time from the gateway via a return link, one or more information items representative of the current transmission resources allocated to the contention access channel RACH and to the demand assigned multiple access DAMA mode; and
the terminal (202) is configured to route the data packets or the packet fragments over the contention access channel RACH via the contention access or a demand assigned multiple access channel via a demand assigned multiple access DAMA according to the size of the packets and their class of service, and information items representative of the current transmission resources allocated to the contention access channel RACH and to the demand assigned multiple access DAMA mode,
the information items representative of the current transmission resources allocated being supplied and transmitted to the terminals of the plurality over a return link.

17. Transmission terminal according to claim 16, further comprising
.- a processing and convergence unit (242) connected upstream with respect to a packet input terminal (248) to the first and second sets (208, 218) of queues and upstream to the first and second accesses (204, 208), and
.- an RA and DAMA access resource management agent (244) connected between a return link port for receiving signalling signals and the processing and convergence unit,
the access resource management agent (244) being configured to:
. * monitor the information items representative of the current transmission resources available on the contention access channel RACH and on the demand assigned multiple access DAMA mode, and
. * initiate resource requests according to the filling of the queues of the first and second sets;
the processing and convergence module being configured to:
. * fragment the packets, delivered at the output of the queues of the mixed second set, into one or more packet fragments according to the size of the packets, then
. * schedule the packets or the packet fragments according to respective priorities, associated with the packets and determined by the quality of service classes of said packets, then
. * pre-assign the packets or the packet fragments through an access mode pre-assignment information item, to an access mode, taken from the first RA access and the second DAMA access, according to information items representative of the current transmission resources allocated to the RA and DAMA accesses and according to a predetermined convergence type, taken from a partial convergence and a total convergence, then
. * encapsulate the packets or the packet fragments according to an encapsulation protocol which depends on the convergence type, then
. * route the packets or the packet fragments to one of the two accesses taken from the contention access RA and the demand assigned multiple access DAMA according to the pre-assigned access mode.

18. Computer programme comprising instructions for the implementation of the transmission method defined according to any one of claims 1 to 13, when the programme is executed by a computer.
